# EUROPEAN PATENT SPECIFICATION

(11) **EP 1 578 071 B1**
(45) Date of publication and mention of the grant of the patent: **16.04.2008**
(21) Application number: 05251062.5
(22) Date of filing: 23.02.2005
(51) Int. Cl.: H04L 12/56

(54) **System and method for provisioning of route information in a meshed communications network**
System und Verfahren zur Bereitstellung von Weglenkungsinformation in einem Maschennetzwerk
Système et procédé d'approvisionnement d'informations d'acheminement dans un réseau maille de communication

(30) Priority: 24.02.2004 US 785902
(43) Date of publication of application: 21.09.2005
(73) Proprietor: Hughes Network Systems, LLC, Germantown, MD 20876 (US)
(72) Inventor: Stevens, Patrick, Mt. Airy, Maryland 21771 (US); Border, John, Poolesville, Maryland 20837 (US); Butehorn, Matthew, Mt. Airy, Maryland 21771 (US); Torres, Robert, New Market, Maryland 21774 (US); Kumar, Vaibhav, Germantown, Maryland 20874 (US)
(74) Representative: Jackson, Richard Eric

(56) References cited:
- US-A1- 2001 036 161
- US-A1- 2002 051 449
- US-B1- 6 584 093
- FITCH, MIKE; RHODES, HELEN: "Eutelsat services for IP access" IEE EUTELSAT SEMINAR, 7 March 2000 (2000-03-07), pages 1-10, XP002336260
- WOOD, L; CLERGET, A; ANDRIKOPOULOS, I; PAVLOU, G; DABBOUS, W: "IP routing issues in sattelite constellation networks" INTERNATIONAL JOURNAL OF SATELLITE COMMUNICATIONS, SPECIAL ISSUE ON IP OVER SATELLITE, vol. 18, no. 6, December 2000 (2000-12), pages 1-18, XP002336261

## Description

### RELATED APPLICATIONS

This application is a Continuation-In-Part of co-pending U.S. Patent Application Serial No. 10/715,178, filed November 17, 23, entitled "System and Method for Routing Among Private Addressing Domains".

### FIELD OF THE INVENTION

The present invention relates generally to a broadband communications system, and is more particularly related to routing among multiple address domains.

### BACKGROUND OF THE INVENTION

The maturity of electronic commerce and acceptance of the Internet as a daily tool by a continually growing user base intensify the need for communication engineers to design for scalability. The robustness of the global Internet stems in part from the routing protocols supporting such communication. The global Internet comprises largely a network of routers to direct network traffic. Improper routing results in packet loss and retransmissions. Namely, in a terrestrial setting, retransmissions do not impose a great cost in bandwidth, in view of the abundance of capacity afforded by advances in fiber optics and networking equipment. Bandwidth constraints are further heightened by the overhead cost of traditional routing protocols. As essentially a terrestrial system, the Internet can operate satisfactorily despite the inefficiencies of such routing protocols. By contrast, a satellite environment possesses unique characteristics compared to that of terrestrial systems, particularly with respect to bandwidth, latency, and network architecture. That is, in a satellite environment, capacity is relatively more precious such that protocol efficiency is a premium. Not surprisingly, bandwidth costs are significantly higher in a satellite network over a terrestrial system. In addition, the satellite network is burdened by inherent latencies stemming, for example, from propagation delay.

Architecturally, satellite systems exhibit interesting properties. These communication systems largely operate over the air according to a hub and spoke arrangement. Consequently, many "neighboring" routing nodes potentially exist on the air side. Additionally, the connectivity over the air is relatively stable; i.e., there are few redundant routes, as most sites are expected to be stub sites.

In addition, new Internet applications follow a peer to peer computing model. Accordingly, an examination of the architecture of traditional satellite systems is required to support these peer to peer applications. The traditional hub and spoke approach would entail greater delay for such applications.

Furthermore, routing across different address domains (i.e., inter-domain routing) introduces the additional complexity of network address translation (NAT) in that mechanisms need to be developed to distribute NAT addresses such that the particularities of satellite systems are considered. NAT provides mapping of "private" network addresses to "public" network addresses, which are globally unique; NAT thus conserves global network addresses (which is of particular concern with Internet Protocol (IP) Version 4 addresses). In terrestrial networks, NAT could be performed at a single point, since all of the remote sites could go via the hub site to the partner organization. However, with satellite systems, remote sites may communicate directly with each other, thereby creating multiple points within an organization whereby NAT may be required for connecting with another privately addressed organization.

US 2001/0036161 describes a satellite routing protocol in which routing information is sent at a periodic rate from one or more subscriber terminals. The route that a packet will traverse through the network is dropped after a route timeout interval.

Based on the foregoing, there is a clear need for improved approaches for providing efficient routing and address translation over a relatively high latency network. There is also a need to routing support over an architecture that can accommodate emerging peer to peer applications.

### SUMMARY OF THE INVENTION

These and other needs are addressed by the present invention, in which a meshed radio network, such as a satellite network, supports inter-domain routing. An address server, which supports Network Address Translation (NAT) functionality, dynamically assigns a NAT address based on a destination address associated with the packet. In other words, the NAT address can be assigned based on the address domain in which the destination is located. The packet originates from an address domain (e.g., private address space) that is different from the address domain associated with the destination address (e.g., global address space). The dynamic assignment supports use of a shared pool of addresses, which can be allocated to a network as a whole, whereby statistical multiplexing gains can be achieved with the shared pool to minimize the quantity of addresses. Additionally, these NAT addresses are "leased" for a specified duration in which the addresses are considered valid; however, a lease renewal mechanism is provided to extend the duration. A redirect mechanism is also utilized to instruct a source terminal originating the packet of the "correct" next-hop, which should be used to route the packet to the specified destination address. That is, each of the terminals is capable of redirecting traffic to the appropriate terminal if the data received can reach its destination via the particular terminal based on a local route table. Further, a central route server is employed within the radio network to collect all route information for a specified private network and to coordinate the distribution of such information to the participating terminals.

The above approach advantageously enables the efficient routing across multiple address domains, while reducing the overhead associated with routing over a meshed network.

According to one aspect of the present invention, a method for providing inter-domain routing of a packet over a mesh network including a plurality of terminals is disclosed. The method includes receiving a request from a first one of the terminals for a network address to route the packet over the mesh network, wherein the packet originates from a first address domain and specifies a destination address associated with a second address domain different from the first address domain. The method also includes assigning the network address based on the second address domain. The method further includes transmitting the network address to the first terminal, wherein the first terminal routes the packet via a second terminal based upon the network address the first terminal having been redirected to communicate with the second terminal.

According to another aspect of the present invention, a terminal for routing of a packet across multiple address domains via a mesh network is disclosed. The terminal includes an air interface configured to transmit the packet to a first one of the terminals, wherein the packet originates from a first address domain and specifies a destination address associated with a second address domain different from the first address domain the air interface receiving a redirect message specifying a second one of the terminals for routing the packet. The terminal also includes a processor configured to generate a request to an address server within the mesh network to obtain a network address based on the second address domain. The air interface receives a response from the address server; the response specifying the network address based on the destination address. The first terminal has been redirected to communicate with the second terminal. The network address is transmitted to the first terminal, and the first terminal routes the packet via the second terminal based upon the network address. The network address in the assigning step is valid for a configurable duration.

According to another aspect of the present invention, a communication system for supporting inter-domain routing of a packet is disclosed. The system includes a plurality of terminals having full meshed connectivity, in which each of the terminals is configured to route the packet to one of a plurality of address domains and to notify a source terminal originating the packet of a correct one of the terminals. The system also includes an address server configured to assign a network address corresponding to the one address domain based on a destination address associated with the packet, wherein the source terminal routes the packet according to the assigned network address. The network address in the assigning step is valid for a configurable duration.

Still other aspects, features, and advantages of the present invention are readily apparent from the following detailed description, simply by illustrating a number of particular embodiments and implementations, including the best mode contemplated for carrying out the present invention. The present invention is also capable of other and different embodiments, and its several details can be modified in various obvious respects, all without departing from the scope of the present invention. Accordingly, the drawings and description are to be regarded as illustrative in nature, and not as restrictive.

### BRIEF DESCRIPTION OF THE DRAWINGS

The present invention is illustrated by way of example, and not by way of limitation, in the figures of the accompanying drawings and in which like reference numerals refer to similar elements and in which:

FIG. 1 is a diagram of a signaling and management protocol architecture of a satellite terminal (ST), according to an embodiment of the present invention;

FIG. 2 is a diagram of a satellite system utilizing static or dynamic routes to establish communication among satellite terminals, according to an embodiment of the present invention;

FIG. 3 is a diagram of a finite state machine of an Internal Satellite Routing Protocol (ISRP) client, according to an embodiment of the present invention;

FIG. 4 is a diagram of a finite state machine of an Internal Satellite Routing Protocol (ISRP) server, according to an embodiment of the present invention;

FIG. 5 is a diagram of a finite state machine for an Address Lease Protocol client, according to an embodiment of the present invention;

FIG. 6 is a sequence diagram of an initialization process among a route server and participating route clients, according to an embodiment of the present invention;

FIG. 7 is a sequence diagram of a route change update collection and distribution process among a route server and multiple route clients, according to an embodiment of the present invention;

FIGs. 8A and 8B are sequence diagrams of redirection processes, respectively, without and with dynamic NAPT (Network Address Protocol Translation) Address Assignment, according to embodiments of the present invention;

FIG. 9 is a sequence diagram of an address lease renewal process, according to an embodiment of the present invention;

FIG. 10 is a sequence diagram of an address server initialization process, according to an embodiment of the present invention;

FIGs. 11A and 11B are diagrams of a Route Table Broadcast message and a format of a Route Table entry, respectively, used in an Internal Satellite Routing Protocol, in accordance with an embodiment of the present invention;

FIGs. 12A and 12B are diagrams of a Route Change Update message and a format of a route change update entry, respectively, used in an Internal Satellite Routing Protocol, in accordance with an embodiment of the present invention;

FIG. 13 is a diagram of a format of a Route Change Acknowledgement message used in an Internal Satellite Routing Protocol, according to an embodiment of the present invention;

FIG. 14 is a diagram of a format of a Route Table Update message, according to an embodiment of the present invention;

FIG. 15 is a diagram of a format of a Heartbeat message used in an Internal Satellite Routing Protocol, according to an embodiment of the present invention;

FIG. 16 is a diagram of a format of a Suspend message used in an Internal Satellite Routing Protocol, according to an embodiment of the present invention;

FIG. 17 is a diagram of a format of a Rejoin message used in an Internal Satellite Routing Protocol, according to an embodiment of the present invention;

FIG. 18 is a diagram of a format of a Satellite Redirect message used in an Internal Satellite Routing Protocol, according to an embodiment of the present invention;

FIG. 19 is a diagram of an addressing approach for supporting communication between two private addressing domains, according to an embodiment of the present invention;

FIGs. 20A and 20B are diagrams of processes associated with establishing communication between the two private addressing domains of the system of FIG. 15; and

FIG. 21 is a diagram of a computer system that can be used to implement an embodiment of the present invention.

### DESCRIPTION OF THE PREFERRED EMBODIMENT

A system, method, and software for supporting intra-domain routing in a meshed network are described. In the following description, for the purposes of explanation, numerous specific details are set forth in order to provide a thorough understanding of the present invention. It is apparent, however, to one skilled in the art that the present invention may be practiced without these specific details or with an equivalent arrangement. In other instances, well-known structures and devices are shown in block diagram form in order to avoid unnecessarily obscuring the present invention.

Although the present invention is described with respect to a satellite network, it is recognized by one of ordinary skill in the art that the present invention has general applicability to data networks with meshed topologies.

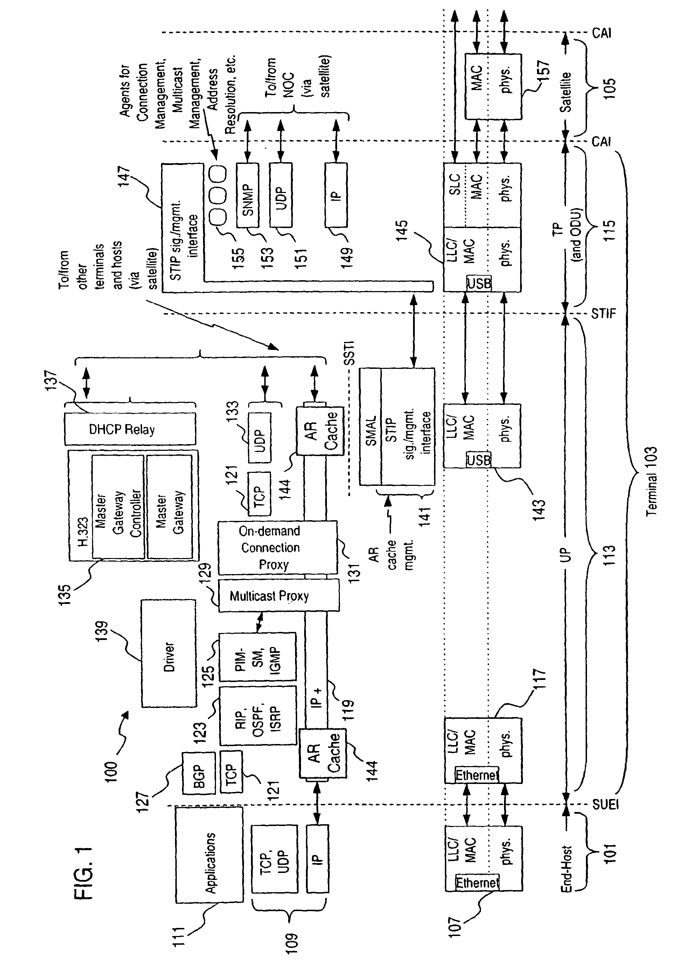

FIG. 1 is a diagram of a signaling and management protocol architecture of a satellite terminal (ST), according to an embodiment of the present invention. As shown, a communications system 100 permits an end-host 101 to interface with a satellite terminal 103 to exchange information over a satellite 105 with other end-hosts (not shown). The satellite 105 communicates with a Network Operations Center (NOC) (not shown), which provides various management functions (e.g., management of network faults, configuration, accounting, performance, and security) of the system 100.

In an exemplary embodiment, the ST 103 is a Very Small Aperture Terminal (VSAT) to which the end-host 101 is attached. Under this architecture, users can communicate from one VSAT ST directly to another in a single satellite hop. The satellite 105 contains a fast packet switch (FPS) (not shown) to process data packets that are exchanged across the system 100. Exemplary switches include an ATM (Asynchronous Transfer Mode) switch, and a Gigabit Ethernet switch; it is recognized by one of ordinary skill in the art that any type of switch can be utilized. The FPS transfers the packets that the payload of the satellite 105 receives on the uplinks to the proper downlinks. The payloads of satellite 105 may include other components, such as uplink antenna, down-converters, switch matrix, demodulator banks, and phased-array downlink antenna; these other components are well known, and thus, are not described in detail.

The end-host 101 includes, in an exemplary embodiment, a network interface 107 (e.g., Ethernet), a Transmission Control Protocol/Internet Protocol (TCP/IP) stack 109, and an Applications layer 111. In lieu of TCP, the end-host may utilize the User Datagram Protocol (UDP).

According to an embodiment of the present invention, the terminal 103 may be functionally partitioned into a User Platform (UP) 113 and a Transmission Platform (TP) 115. The UP 113 is responsible for interfacing with the end-user networks. As such, the UP 113 includes a network interface 117 (e.g., Ethernet), an IP layer 119, and a TCP layer 121. UDP 133 can also be supported. The UP 113 also supports a number of routing protocols 123, such as the Routing Information Protocol (RIP), and Open Shortest Path First (OSPF). Additionally, the present invention provides an Internal Satellite Routing Protocol (ISRP) to handle routing over a radio communication system, such as a satellite network. With ISRP, the system 100 has the capability at the air interface to allow STs to exchange routing information about the IP networks that can be reached through them, including IP network addresses and distance metrics.

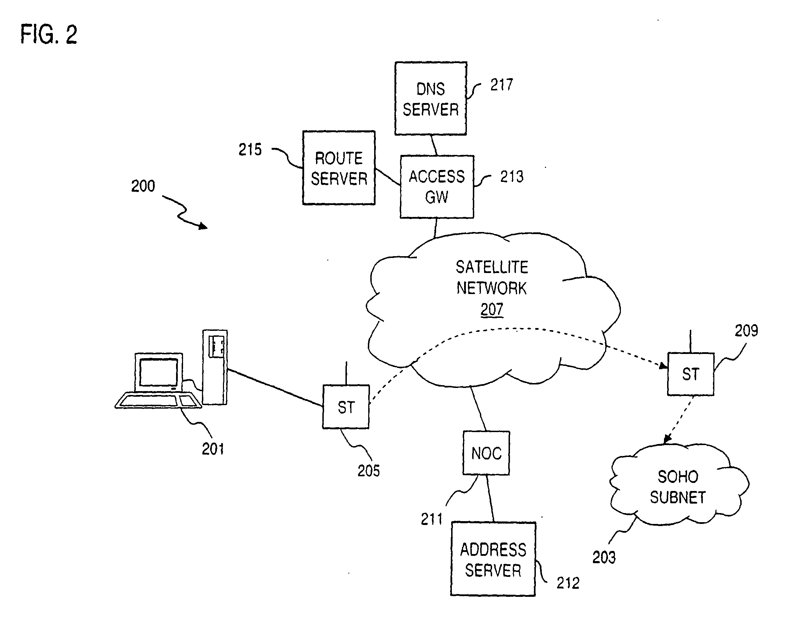

The Internal Satellite Routing Protocol (ISRP) refers to a family of sub-protocols, each of which is involved with supporting IP routing over the air. According to an embodiment of the present invention, these sub-protocols, which are more fully described below with respect to FIG. 2, include an ISRP Core Routing protocol, an ISRP Redirect Routing protocol, and an ISRP Address Lease protocol. This suite of protocols is more fully described later.

In an exemplary embodiment, the ISRP messages are carried over UDP/IP, and are sent using a reserved UDP port as the destination port number in the UDP header. This UDP port number is denoted as the "ISRP port." The IP layer 119 runs the ISRP Core Routing protocol, which is a dynamic routing protocol on the air interface. A set of ST ports, which constitute members of an "ISRP Routing Domain," participate in this protocol to learn routes reachable through each other.

As a distance vector protocol, RIP determines a route based on the smallest hop count between source and destination. The Open Shortest Path First routing protocol is a link state protocol and serves as an interior gateway protocol (IGP). These dynamic routing protocols 123 operate over IP; RIP and OSPF are terminated at the terrestrial interface, while the ISRP is terminated at the satellite interface.

Additionally, a variety of multicast protocols 125 are supported, including Internet Group Management Protocol (IGMP) and Protocol-Independent Multicast - Sparse Mode (PIM-SM). These protocols 125 operate with a multicast proxy 129 to provide multicasting functionality.

The UP 113 is also loaded with appropriate software drivers 139 to permit exchange of information over the satellite network. To interface to the TP 115, the UP 113 possesses a Signaling and Management Adaptation Layer (SMAL)/System Transmission Information Packets (STIP) interface 141, and a data interface (e.g., Universal Serial Bus (USB)) 143 with Logical Link Control/ Medium Access Control (LLC/MAC) and Physical Layer (PHY) functionalities. Within the UP 113 is a System Transport Interface (SSTI), which is used to separate the IP Adaptation functions from the satellite network specific functions of the ST. The SSTI is used in the inter-working mechanisms of IP over the satellite network. An IP (e.g., IPv4 or IPv6) network address is assigned to the IP interface of the SSTI, while a satellite network MAC address is assigned to the SMAL interface 141 of the SSTI. Resolution between these two addresses is performed when other STs intend to send IP packets across the satellite link to this ST as the next hop IP router.

An additional network address (IPv4 or IPv6) is assigned to the IP interface associated with the Ethernet interface. The Ethernet portion of the UP 113 contains an Ethernet link address that was determined when the UP 113 was manufactured. Resolution between these two addresses is performed when hosts and routers on the STs terrestrial interface intend to send IP packets to the ST as the next hop IP router.

IP datagrams may enter the ST 113 terrestrially or by a satellite link. The present invention, according to one embodiment, describes the determination of the IP address of a "next hop" router and its MAC layer address in order to forward the IP datagrams.

The system 100 permits nodes from separate private networks to communicate through the use of translation mechanisms. Specifically, the system 100 utilizes network address translation (NAT) and application layer gateways (ALGs), routing and address resolution are de-coupled. Address resolution is the means by which a network layer (IPv4 or IPv6) address is resolved to a link layer address.

The system 100 utilizes statistical multiplexing of NAT addresses, even though NAT occurs at several points. Also, the system 100 supports simultaneous "NATting" to several different address domains. Further, the system 100 allows private to public NAT in a manner such that connectivity to any public network is supported (through use of a public address domain). Moreover, in a scenario whereby a community of privately addressed networks need equivalent connectivity to each other, the system 100 can accommodate such a scenario through the definition of a shared community-wide public address domain.

To better appreciate the present invention, by way of example, the processing of a received packet is as follows. A network device capable of performing routing functionalities (e.g., a router, a satellite terminal (ST), etc.) examines the destination IP address of a received packet to determine if it is the destination. If in fact the network device is the destination device, the network device passes the IP packet "up the stack" to the appropriate application based on the protocol field. If not, the network device decrements a Time to Live (TTL) counter (or Hop Count), discarding,the packet if this value equals zero. The network device then examines the destination IP address to determine if the destination host belongs to the subnets associated with any of the network device's interfaces. If so, the network device performs address resolution of the destination host IP address as described in the step below. If not, the network device determines the "next hop" IP address from the route table, and address resolution of the next hop (or destination host) IP address is performed.

Address resolution determines the MAC layer address associated with the next hop IP address (e.g., an Ethernet MAC address). The IP datagram is encapsulated with a MAC layer header, and the packet is passed "down the stack" to the router interface as determined by the route table.

The TP 115 interfaces with the ST's satellite over an air interface. Accordingly, the TP 115 includes a data interface (e.g., Universal Serial Bus (USB)) 145 that communicates with the data interface 143 of the UP 113. The TP 115 has a STIP Signaling/Management interface 147, which interacts with the SMAL/STIP interface 141. In addition, the TP 115 includes an IP layer 149, a UDP layer 151, a SNMP module 153, and agents 155 for connection management, multicast management, address resolution, etc.

The satellite 105 supports an access layer 157 to communicate with the corresponding interface 145 of the TP 115. The system 100 supports mesh point-to-point communications, enabling the exchange of packets among STs via a single hop.

At times, the terminal 103 may be inactive; e.g., a customer turns the terminal off, equipment malfunction, power failure, etc. When service for an inactive ST is resumed, the terminal 103 is able to signal to the end-host 101 that routes over the satellite network are reachable.

The ST 103 possesses the ability to resolve IP addresses to destination ST addresses using, in an exemplary embodiment, local table lookups to the ST 103 or using queries to the NOC. That is, the system 100 supports Address Resolution queries between the terminal 103 and the NOC. According to one embodiment of the present invention, an AR cache 144 is provided for each interface; alternatively, a single AR cache can be used. Address resolution is performed after the router interface is determined and makes use of an AR cache 144, which keeps AR entries for resolving the network address. The AR cache 144 is populated by a network protocol associated with the router interface. In addition, static AR entries can also be configured. The exact format of the cache entries depends on the particular implementation; however, a common data structure exists for all AR caches 144. Each entry contains a network address (IPv4 or IPv6), the link layer address, and a timeout value. A customer may specify the cache timeout value via configuration. AR entries may be removed from the cache when the timeout value has elapsed.

With respect to customer networks that are supported by the system 100, the ST 103 has two link layer interfaces: a satellite network interface and a network interface (e.g., Ethernet). For the Ethernet interface, the ST, in an exemplary embodiment, utilizes ARP (Address Resolution Protocol), according to Internet Engineering Task Force (IETF) RFC 826, for resolving IPv4 addresses and Neighbor Discovery (ND ), according to IETF RFC 2461, for resolving IPv6 addresses. Both IETF RFCs 826 and 2461 are incorporated herein by reference in their entireties. The ST 103 supports an AR cache 144 for each of its Ethernet interfaces. The size of this cache is dependent on the number of hosts/routers that are connected to the LAN segment.

The AR cache 144 supporting IPv6 and the Ethernet link may contain only a portion of the IPv6 address. If the Site Local Address identifier (SLA ID) -- for Global Unicast addresses -- or the Subnet ID are mapped uniquely to an Ethernet interface, then the AR cache 144 entry may use the 64-bit Interface ID or Station ID to identify the network address to be resolved.

Because the satellite network is a shared resource in which many subnets all use a single communication link, next-hop IP addresses assigned by the customers are not guaranteed to be unique. However, uniqueness is required in order to resolve to the Satellite MAC address. This approach utilizes a "Satellite Context Identifier" (SCID) (which uniquely identifies the customer for a region). This identifier may be used in addition to the next-hop IP address to perform address resolution for the satellite interface.

As shown in Table 1, an exemplary data structure of the AR cache 144 for the satellite link includes the SCID, the next-hop IP address, and a 32-bit unicast Satellite MAC address as shown in Table 2 (below), and an AR pass/fail indicator. The SCID is part of the Route Table entry and is used by the ST 103 when performing address resolution on the satellite interface.

**Table 1**

| Satellite Context ID | Next Hop IP Address | Satellite MAC | AR |
|---|---|---|---|
| (SCID) | | Address | Pass/Fail |
| 16 bits | 32 bits | 32 bits | 1 bit |

**Table 2**

| 21 bits | 11 bits |
|---|---|
| Destination Sub-address | Destination Information |

AR cache entries for the satellite link are configured by a user (or customer) or learned by the ST 103 using the Satellite ARP. Configured cache entries can have a predefined value for the cache timeout, which signifies that the entry is not to be timed out. One use of static cache entries, for example, is for the case when the ST is configured with a default route pointing to its access gateway. In such a case, a static AR entry is so configured to resolve the network address of the access gateway to match the default route. The NOC can validate the configured static AR entries to conform, for instance, to community of interest (COI) restrictions.

If an ST 103 is configured with a satellite ARP, and an entry is not found in the AR cache 144 associated with the STs satellite interface, then the ST 103 participates in the Satellite ARP protocol to resolve the network address to the satellite MAC address. Entries learned by way of Satellite ARP are inserted into the AR cache 144 along with the pre-configured cache timeout value.

There are conditions when the NOC is configured with MAC addresses for the same network address. In such a case, the network addresses associated with the same Satellite MAC address need not be part of the same COI. This characteristic allows the NOC to resolve the network address to the Satellite MAC address by making use of the SCID of the AR request.

The ST's Transport Platform (TP) and the NOC participate in the Satellite ARP protocol. The NOC provides an address server, which contains a database of all the Satellite MAC addresses assigned to all customer networks supported by Satellite for each satellite in a given region. The Satellite MAC address is unique to a specified satellite link. Associated with the Satellite MAC address is a network layer (IPv4 or IPv6) address and a Satellite Context ID (SCID). The network layer address is unique within the customer network, but not necessarily unique within the satellite link.

The notion is that the ST 103 can query the address server for the address resolution information to forward a packet. After validating the query, the address server returns an entry for the address resolution information. The ST 103 inserts this entry into the AR cache 144 associated with the satellite interface and uses it to forward the packet to another ST across the satellite link. The IP packet that triggered the Satellite ARP request (and subsequent IP packets to the same subnet) is queued. In an exemplary embodiment, the NOC responds to an address resolution query within a predetermined time period (e.g., 2 seconds) over the space link. The two messages necessary for this mechanism are Satellite ARP Request and Satellite ARP Response.

According to one embodiment of the present invention, the Satellite ARP Request has the following format: Satellite ARP Version Number, Satellite ARP Message Type (Satellite ARP Request), Network Type (IPv4 or IPv6), Network layer (either IPv6 or IPv4) address to be resolved, and Satellite Context ID (SCID). Further, a Satellite ARP response may have the format: Satellite ARP Version Number, Satellite ARP Message Type (Satellite ARP Response), Network Type (IPv4 or IPv6), Network layer (either IPv6 or IPv4) address to be resolved, Satellite Context ID (SCID), Satellite MAC address, and Satellite ARP Response Status.

When the NOC receives a Satellite ARP request, the NOC identifies those COIs of which the particular ST 103 is a member and searches the corresponding AR tables. The NOC uses the SCID and the "next hop" network address within the appropriate COIs to search for the Satellite MAC Address. The NOC returns the matching AR entry in the Satellite ARP response message. These tables may be populated as part of a customer configuration process of an ST 103. A Satellite ARP response status is returned for error conditions or when COI restrictions prevent communication.

When the ST 103 receives the Satellite ARP Response message, the ST 103 caches the entry, sets a timer, and uses the information in the Satellite ARP Response message to form the satellite packet. The entry is cached regardless of the value of the Satellite ARP Response Status. If the Satellite ARP Response gave a "fail" indication, then subsequent AR requests following a route lookup will avert the sending of Satellite ARP Requests that would be denied. As with successful ARP Responses, unsuccessful ARP Responses cache entries would be timed out.

As stated, the above address resolution process is decoupled from routing, which is described below in FIG. 2.

FIG. 2 is a diagram of a satellite system utilizing static or dynamic routes to establish communication among satellite terminals, according to an embodiment of the present invention. For the purposes of explanation, a communications system 200 is described with respect to IP packets originating from an end-host 201 to a Small Office/Home Office (SOHO) network 203 using static or dynamic (via ISRP) routes. The end-host 201 couples to a satellite terminal 205, which provides access to a satellite network 207. The SOHO subnet 203 receives the IP packets via ST 209.

By way of example, the route table of the ST 209 supporting the SOHO subnet 203 contains static route(s) pointing to the elements of the SOHO subnet 203. A NOC 211 provides the customer with the capability to configure the static route entry. As mentioned previously, the NOC 211 can include an address server 212. When the ST 209 receives an IP packet from a satellite link, the ST 209 performs a lookup to find a matching route entry that contains, in an exemplary embodiment, the destination IP subnet, a network mask, the next hop IP address, and a cost metric. The ST 209 then resolves the next hop IP address.

As seen in FIG. 2, a Domain Name System (DNS) server 217 is deployed behind the access gateway 213. As used herein, the term "DNS server" refers to a computing system that is configured to execute the name server processes, which is more fully described later.

Under this scenario, a telecommuter, for example, is connected to the office (which is served by the SOHO subnet 203) by the end-host 201. Assuming the telecommuter frequently interfaces with the SOHO subnet 203, the routing approach for the telecommuter ST 205 is likely static routing. In this case, the customer configures a static route into the ST supporting the telecommuter whose destination address matches the SOHO subnet 203 and whose next hop points contains the network address of the SOHO ST 209. The NOC 21 provides the customer with the capability to configure these static route entries.

In an exemplary embodiment, a static route entry includes the following fields: a destination IP subnet, a subnet mask, the Satellite Context ID (SCID), a next hop network address, and a cost metric. The static AR entry may be configured into the satellite interface of the telecommuter ST 205, which resolves the network address (using the SCID) of the static route.

In the above example, the end-host 201 designates the ST 205 as the default "router." When packets enter the terrestrial interface of the ST 205, the ST 205 performs a route table lookup. If the packet is destined for the SOHO network 203, then the static route configured by the NOC 211 is selected. The default route, as indicated, for example, by 0.0.0.0 in the IPv4 network address field of the route entry, specifies the next hop IP layer address when a match is not found in the route table for the IP datagram's destination address. Both default and static route table entries would include the next hop network address (IPv4 or IPv6) and the Satellite Context ID for the satellite interface.

The system 200 also supports dynamic exchange of routing information among STs as well as between STs and terrestrial routers through several routing mechanisms. These routing mechanisms can be classified into two categories. The first category relates to the link layer interface; i.e., terrestrial versus satellite. According to an exemplary embodiment, the routing mechanisms that are supported by the terrestrial interface of the ST 205 (e.g., Ethernet) may conform to IETF standard protocols. The routing mechanisms that support the satellite interface of the ST 205 may support IETF standard routing protocols or provider developed protocols.

The second category of routing mechanisms relate to STs (and other routers) that exchange routing information within a customer's network, and STs (and other routers) exchanging routing information between customer's networks. The protocols that exchange routing information within a "domain" or customer's network are referred to as interior routing protocols (IGPs), while protocols that exchange routing information between "domains" or customers' networks are referred to as exterior routing protocols (EGPs).

The STs 205, 209 support IP (e.g., version 4 and version 6) at their terrestrial interfaces. The STs 205, 209 that are configured to support IP may support, for example, RIPv1, RIPv2, or OSPFv2 for dynamic routing on their Ethernet interface. The STs 205, 209 that are configured to support IPv6 may support RIPng (RFC 2080) or OSPF for IPv6 (RFC 2740) for dynamic routing on their Ethernet interfaces. The NOC 211 provides the capability to configure the ST with RIPv1, RIPv2, and RIPng parameters to support dynamic routine on its Ethernet port, as well as the capability to configure the ST with OSPF parameters to support dynamic routing on its Ethernet port.

As mentioned previously, the ST 205, 209 can also employ an Internal Satellite Routing Protocol (ISRP), which is an IGP that sends dynamic routing information across the satellite interface. This routing mechanism, in an exemplary embodiment, utilizes an access gateway 213 in communication with a route server 215 that acts as a centralized point within a customer network for distributing routing information. As evident from the above discussion, ISRP, in an exemplary embodiment, operates with the Internet Protocol (IP) (e.g., IPv4 or IPv6), whereby each version of IP requires an assignment of a value to the protocol field of the IPv4 header or the next header field of the IPv6 header. As noted earlier, ISRP can also operate using UDP/IP with an assigned "ISRP port."

ISRP specifies the set of mechanisms that are used by the STs and the route server 215 at the access gateway 213 for providing dynamic routing information to customer STs. According to one embodiment of the present invention, the ISRP specifies the following elements: the ISRP messages used for dynamic routing, the behavior of the route server as it sends and receives these messages, the behavior of the ST as it sends and receives these messages, and the handling of cost metrics between terrestrial protocols and ISRP. Within the customer's network, the route server and its member STs exchange routing entries (which is more fully described below).

As discussed, an ST may be configured to run dynamic routing protocols (e.g., RIPv1, RIPv2, and OSPFv2) for their terrestrial networks. ISRP specifies the behavior of the ST in translating the terrestrial routing protocol information with internally represented routing information. Cost metrics are exchanged between terrestrial protocols and ISRP, particularly whenever route redistribution takes place in a router. Route redistribution is the process within a router whereby the ports of a router are executing more than one dynamic routing protocol. For example, the router may operate OSPF from some of its ports and RIP on the remaining ports. Cost metrics may measure multiple parameters. Metrics may measure throughput, delay, financial cost, and reliability or hop count. Exemplary metrics are detailed in "Routing in the Internet" by Christian Huitema (2nd edition), which is incorporated herein in its entirety.

Distance vector type routing protocols, such as RIP, use the cost metric for measuring the number of hops to the destination network. Link state protocols may use a linear combination of parameters to arrive at a cost metric. At issue within the satellite network is how cost metrics are converted between RIP and ISRP, between OSPF and ISRP, and how the STs route table are used to specify cost. Network service providers may assign an integer value to the cost of the satellite link.

One possibility is to assign a linear relationship between the cost metrics represented terrestrially and those represented over the satellite link. For example, if *Cₜ* represents the cost as represented by RIP or OSPF, and *Cₛ* represents the cost as represented by ISRP, then a linear relationship could be specified by the formulation: *Cₛ* = *a* * *Cₜ* + *b*. The NOC provides the mechanism for the customer to configure the values of *a* and *b* for the STs that perform the translation.

According to one embodiment of the present invention, ISRP operates according to a route server model, whereby the participating entities exchange distance vector information. The route server architecture contrasts with the concept of distributed dynamic routing protocols, where routing information is conveyed in the network in a distributed fashion. With the route server architecture, a central server 215 collects all route changes and coordinates the distribution of these changes to the participating routers. This approach advantageously results in less network bandwidth being used for overhead. These characteristics are well suited for a satellite network with mesh capability.

An ISRP routing domain is defined as a set of ISRP core routing entities, each entity running in either one of the two modes of ISRP core routing operation - either as an ISRP route server 215, or as an ISRP route client. Each ISRP routing domain includes an ISRP core routing entity operating as an ISRP route server. All other participant ISRP core routing entities run as ISRP route clients. The ISRP route clients are pre-configured with the address of the route server. It is noted that a single ST Port may have two ISRP core routing entities, one running as a route client and the other as a route server. The selection of the ST port to host the route server from among all ST ports constituting an ISRP routing domain, according to one embodiment of the present invention, can be entirely static, based on the configuration.

The ST runs, for example, an IGP (e.g., RIP) at its terrestrial ports. Routing information learned at the terrestrial interface is used to update the routing database at the ST. Any change in the routing information learned at the terrestrial ports can trigger appropriate route changes to be advertised at the air interface via the ISRP Core Routing protocol. Similarly, changes in the routing database induced by ISRP routing updates at the air interface trigger appropriate route information to be advertised at the terrestrial interface.

ISRP Redirect Routing provides another mechanism by which routing information may be disseminated over the air. This ISRP sub-protocol provides a means for an ST port to advertise, in a point-to-point fashion to another ST port the proper route (as present in its local route table) to use for a particular network. The triggers for the generation of this point-to-point route advertisement include the receipt of a misrouted packet at an ST port on its air interface. An entity involved in the generation and consumption of ISRP Redirect Routing messaging within an ST port is defined as an "ISRP Redirect client."

The ISRP Address Leasing sub-protocol is used for dynamic assignment of NAPT (Network Address Protocol Translation) addresses for satellite NAT purposes. An "ISRP Address client" is the entity resident at an ST port that engages in ISRP Address Leasing signaling with an "ISRP Address Server." The Address Server uses a pool of configured addresses to assign temporary leases of addresses as and when requested by Address Clients. This protocol also defines signaling for requesting extensions of address leases.

The ISRP Core Routing protocol exchanges routing information via route entries, whereby each route entry advertises reachability for a particular network or host address, (represented as a network address and network mask pair) via a specific next-hop node (i.e., ST port). In addition, each advertised route entry contains a measure of the cost of the route. An ISRP route client advertises information about all routes reachable via the terrestrial interface of the ST port at which the route client resides. This information is required by all "peer" route clients to learn about the terrestrial connectivity at each of the peers.

Routing information is disseminated, in an exemplary embodiment, using unicast transmission of the routing information by each route client to the route server 215. The route server 215 can then multicast the information thus collected to all the route clients. Before multicasting the information, the ISRP server 215 can provide pre-processing of the collected routes. For example, pre-processing can be used to further reduce traffic by performing distance vector for the route clients, or to apply network wide routing policies. This mechanism of route distribution via a proxy vis-à-vis direct distribution conserves system bandwidth by not requiring each ST port to send point-to-point route updates to all peer ST ports in addition to not requiring them to know about all possible peers.

The operation of the ISRP Core Routing protocol is as follows. At initialization, ISRP route clients use the terrestrial reachability information compiled by a terrestrial protocol to specify their entire terrestrial connectivity to the well-known port at the (pre-configured) route server. The route server collects all the updates and multicasts them to all the route clients. Subsequent changes in terrestrial connectivity result in the route changes thereby induced, to be collected and conveyed to the route server 215 by the affected route client. The route server 215 multicasts these changes to all the route clients. The route clients also send periodic messages to the route server 215; the receipt of these messages at the route server 215 being an indication of presence of connectivity with these route clients. If these periodic messages are not received for a certain period of time, the connectivity with the associated route clients is assumed to be lost, and the route server 215 updates its database to reflect this loss of connectivity. This information is then multicast to all route clients.

The fact that route information advertised by the route clients can be a subset of the total applicable information-set in the current route table at the route client introduces the necessity of maintaining state about route table updates at the route clients and the route server 215. The route server 215 maintains a route database version number that specifies unambiguously the state of the route database. The route clients are expected to keep their local route table updated to the same version as of the central database. Version numbers are advertised in the messages that are exchanged between the route clients and the server, to keep each other appraised of the updates to the route information. If the server detects a route client as using an incorrect version number it takes suitable actions to update the route client with the route information that is required to bring the route client up to date. The protocol ensures that if a route client misses an update it subsequently learns the missed information to bring its route table in synchronicity with the central database.

Because the ISRP Core Routing protocol is a distance-vector protocol, issues of instability and convergence are of concern. The protocol can employ split horizon (without poisoned reverse) to address these concerns. An ISRP route client only advertises terrestrial routes (i.e., routes with the next-hop node reached over its own terrestrial interface) to the route server 215. This guards against the problem when an old incorrect route is advertised by a "non-authoritative" ST, thereby corrupting the route. In addition, a route client, on detecting the loss of connectivity to a network reached over its terrestrial interface, updates the cost of the route to infinity and advertises this updated route to the route server 215. It is noted that this is required to delete the routes, since routes (learned over the air interface through Core Routing) never time-out at the route clients.

As an additional safeguard against routing instability, the system can optionally implement "triggered updates" for deleted routes. Under this approach, the client, upon learning loss of connectivity to a network, will immediately send an update to the route server 215. The route server 215, on receiving an update from a route client advertising a deleted route; that is, a route with a cost of infinity immediately multicasts the update to the route clients to delete the invalid route as soon as possible from the route tables at the route clients.

As a distance vector protocol, the semantics the ISRP associates with the cost of a route is the number of hops required to reach the network indicated in the route, as that employed, for example, in RIPv2. In general, it may be necessary when importing routes learned via the terrestrial protocol into ISRP for advertisement over the air to derive suitable costs to advertise for those routes. This derivation is specific to the terrestrial protocol. Furthermore, an implementation may allow policy based cost-setting for ISRP advertisement. Similarly, cost of routes learned via ISRP are modified before importing them into the local route database.

The ISRP Core Routing protocol also includes an ISRP Bootstrapping protocol. The ISRP Bootstrapping protocol allows the facility for ISRP route clients to advertise their terrestrial routes to the route server 215 of their routing domain, without providing for the dynamic distribution of this collected route information by the route server 215 to its route clients. In conjunction with the ISRP Redirect Routing protocol, the Bootstrapping protocol enables "on-demand" dynamic routing. In a network where communication with most of the peer ST ports of the routing domain is infrequent, Bootstrapping (with Redirect Routing) avoids the overhead of distribution of collected routes by the route server 215, particularly if the network is highly dynamic.

ISRP Bootstrapping based routing operates as follows. The ISRP route clients in an ISRP routing domain advertise all terrestrial routes and route changes using signaling specified by the Core Routing protocol to the route server 215 of the domain. The network-wide route database built up in this manner by the route server 215 is propagated to the local route client, which assumes the role of the "hub" of the network, and where the route database is applied to the local route table. All other clients are configured with static route(s) such that all packets destined anywhere within the (intra-) network are directed to the hub. The hub then uses Redirect Routing to convey the appropriate routes at clients, if and when required.

The ISRP Redirect Routing protocol supports on-demand point-to-point route distribution. An ST port, on receiving an IP packet at the air interface that needs to be re-routed back on the air interface may use Redirect Routing signaling (the ISRP Satellite Redirect message) to implant the correct route at the ST port originating the packet. The ST port receiving the initial Satellite Redirect may then implant the reverse route (to itself) at the correct next-hop ST port, thereby establishing a complete two-way communication path.

Redirect Routing can be used for dynamic intra-network routing (i.e., routing within an ISRP routing domain), when ISRP Bootstrapping is used within the network. This redirect routing mechanism supports inter-Routing Domain routing (both within and across administrative boundaries) without requiring configuration of static routes at all ST ports. In this way it allows for semi-dynamic inter-Routing Domain routing. This routing is not fully dynamic since configuration of static routes is required at the hubs of the networks for Redirect based routing to work across routing domains. The redirect routing mechanism provides the advantages: further reduction in routing overhead (over the full core routing mechanism), particularly when the communication is predominately between a hub ST and the remote STs, and mesh (peer to peer) communication accounts for a relatively small amount of the total traffic; and supporting "thin" clients with reduced resources that translates to a smaller route table size (vis-à-vis the route server).

As earlier discussed, the satellite redirect procedure is triggered when a route lookup at an ST port on an IP packet incoming on the air interface determines that the packet is to be routed back on the air interface. When this condition is detected, the routing function triggers the ISRP Redirect client resident at the ST port to compose and send an ISRP Forward Satellite Redirect message to the ISRP port of the ST port from which the IP packet was received. The message specifies the "correct" next-hop that should be used to route packets to this destination, which may be a network address or a host address. The message also specifies, as part of the information of the route, the address domain identifier of the address domain to which the destination belongs.

The receipt of a Forward Satellite Redirect message (or "Forward Redirect") by a redirect client leads to the generation of a Reverse Satellite Redirect message (or "Reverse Redirect") directed to the Redirect client at the destination ST port. The purpose of the Reverse Redirect is to install the "reverse" route at the destination ST port, i.e. the route towards the source ST port. The destination network in the Reverse Redirect may be the source host's IP address itself (this is the NAPT address), in case the Redirect is for enabling inter-address domain communication. In case of intra-address domain, the destination network address indicated in the Reverse Redirect is obtained from the source network address field in the Forward Satellite Redirect that triggered the Reverse Redirect.

The receipt of a Forward Satellite Redirect may not immediately result in a Reverse Redirect. Such is the case when the route received in the Forward Satellite Redirect is a route pointing to an external address domain, and the receiver of the Forward Satellite Redirect does not have a satellite NAT/NAPT address required to communicate with that destination address domain. In this case, the receipt of the Forward Satellite Redirect will trigger a NAT Address Request procedure for obtaining the required destination address domain. Thereafter, the Reverse Redirect is generated.

The redirect client, on receiving an ISRP Satellite Redirect (both forward and reverse), updates the local route table with the route entry received in the message. A cost-metric comparison, in an exemplary embodiment, is made to ensure that the route is accepted only if it is better than a previously installed alternative route for the same destination network. Any subsequent packets sent to the destination (host or network) should be sent as per the route specified by this route entry.

All routes learnt via the Satellite Redirect mechanism, according to one embodiment of the present invention, are associated with a time-to-live value, which specifies the time in seconds for which the route is valid at the client receiving the Redirect message. The ISRP Redirect client deletes the route at the expiry of the assigned TTL. If a Satellite Redirect message is received with a route that already exists as a dynamic route in the route table of the receiver (via the same next hop), then the TTL of that route is set to the new TTL advertised for the route in the Satellite Redirect. If a route is received with a TTL of zero then that route must be discarded immediately. This also applies if the route already exists with a non-zero TTL; this route must be deleted immediately when the same route is received in a Satellite Redirect with a zero TTL.

A Satellite Redirect message may require an optional acknowledgement to indicate to the receiving redirect client that the Redirect message was received and processed by the intended receiver. After sending a Redirect with the ACK flag set, the redirect client starts a timer for the acknowledgement to be received. If a (positive) acknowledgement is not received before the expiry of the timer the Redirect is sent again. This retry procedure is attempted according, for example, to a maximum number of retries. If the maximum number of retries is exhausted and an acknowledgement is not received the Redirect procedure is aborted. The receipt of a negative acknowledgement also aborts the redirect procedure.

In general, Forward Satellite Redirect messages do not require acknowledgement, i.e., with the ACK flag not set, as loss of a Forward Satellite Redirect is not of significant concern. That is, the Forward Satellite Redirect can and will be generated again at the receipt of a subsequent "misrouted" packet. However, Reverse Redirect messages (both sent within or across address domains) are sent with the ACK flag set. It may seem that Reverse Redirect messages that do not cross address domains may be sent unacknowledged. However, intra-address domain Reverse Redirects may still cross ISRP Routing Domain (i.e., administrative) boundaries, and therefore, recovery from a lost Reverse Redirect even in this scenario is not guaranteed. In other words, there is no other way than the Reverse Redirect to install the reverse route. Hence, the all Reverse Redirect messages require acknowledgement.

It is noted that Satellite Redirect generation and processing of a received Redirect message is an optional capability, whereby any given redirect client can be configured to generate or not generate a Satellite Redirect in response to an appropriate trigger. Such configurations can instruct the redirect client to process or discard received Satellite Redirect messages. By way of example, the following configuration options can be specified at a redirect client: a Generate Redirect Flag, and an Ignore Redirect Flag. With respect to the Generate Redirect Flag, if this boolean configurable parameter is set to false, the redirect client does not generate a Forward Satellite Redirect on receiving a "misrouted" IP packet. It is noted that this flag does not control the generation of Reverse Satellite Redirects. The Ignore Redirect Flag can also be a Boolean parameter, whereby if the flag is set to true, the redirect client discards any received Forward/Reverse Satellite Redirect messages without any further processing.

The concept of an Address Domain is central to the address translation architecture of satellite network 200. An address domain identifies a collection of networks that use consistent IP addressing. Each ST port is associated with a 'home' address domain, which, by definition, is the address domain to which the hosts served by that port belong. Two ST ports in the same address domain do not need to perform satellite NAT to enable networks served by those ST ports to communicate with each other. The same cannot be said of two ST ports belonging to two different address domains, in which case satellite NAT is performed to enable communication between the networks served by any such pair of ST ports. It is noted, however, that communication between different address domains need not necessarily always involve satellite NAT.

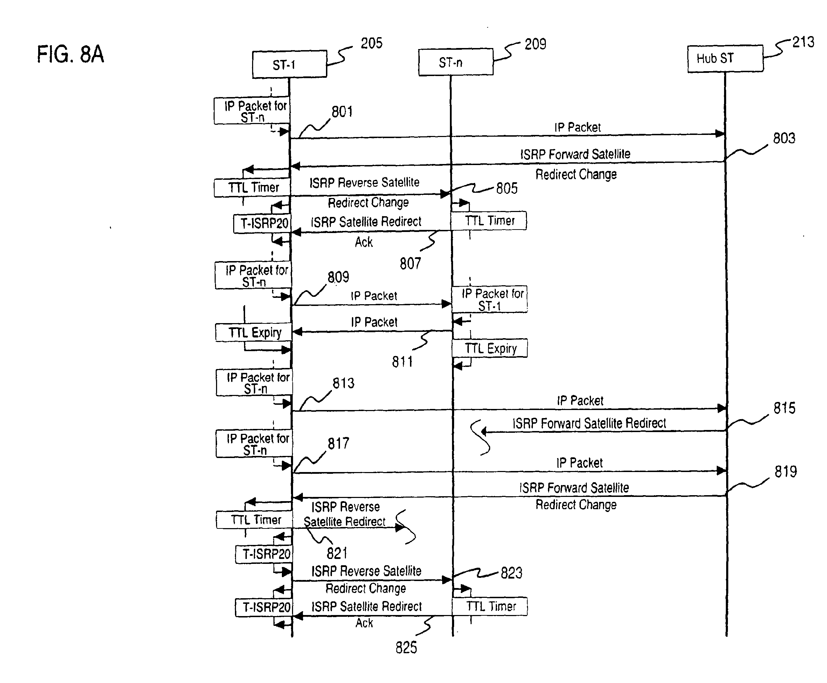

According to one embodiment of the present invention, satellite routes that are distributed via the Satellite Redirect mechanism are associated with a Destination Address Domain ID, which identifies the address domain to which the destination belongs. The satellite NAT/NAPT addresses (as source IP addresses) that are required to communicate with a particular destination network are bound to the destination address domain of that destination network. It is also possible for multiple NAT addresses to be valid for any given destination address domain, wherein the correct address to use is determined by the original source IP address in the packet. Such a case may occur when certain addresses are NAT addresses mapped one to one with certain hosts. Even in this case only one NAPT address may be assigned, which is used for all hosts other than the ones for which any static NAT addresses have been defined. The NAT/NAPT addresses to be used for a particular destination address domain may be obtained dynamically; this process is detailed in the discussion of FIG. 8A. It is also possible for the ST ports to be statically pre-configured with NAT/NAPT addresses to be used for certain destination address domains.

It is noteworthy to draw the distinction between an Address Domain and an ISRP Routing Domain. An ISRP Routing Domain is a construct used to define the set of ST ports that constitutes a dynamically routed intra-network governed by a single administrative authority. In this sense an ISRP Routing Domain identifies a collection of ST ports comprising, for example, an intranet. An address domain, on the other hand, identifies a set of ST ports that serve networks having consistent IP addressing plans, and has little relation with the administrative boundaries. A single address domain can include several distinctly managed networks, and therefore, multiple ISRP Routing Domains.

According to one embodiment of the present invention, an address domain may be purely virtual, i.e., with no ST port using that domain as its home address domain. The virtual address domain can be used as an intermediary domain for access between networks. Use of virtual address domains allows additional flexibility in defining addressing policies to be implemented for inter-network communication.

As evident from the above discussion, communication across different address domains generally requires the use of satellite NAT/NAPT. An ST port needs to obtain knowledge of the satellite NAT addresses associated with the destination address domain of (i.e., indicated in) a route for sending packets to a destination host using that route. If NAT/NAPT addresses for a destination address domain are not configured, then prior to sending packets to that address domain the corresponding NAPT address is dynamically obtained from the appropriate NAT Address Server, as more fully described below in FIG. 8A.

For communication across administrative boundaries (and frequently within a single administration across routing domains) IP address translation may be required. The ISRP Address Leasing protocol provides a mechanism to obtain on-demand the IP address to translate packets for such a communication. A managed network may define one or more ISRP Address Servers to assign NAPT addresses to Address Clients requesting these addresses. It is noted that one address client may only be served by one Address Server, but there could be multiple Address Servers serving distinct sets of clients within an administrative domain.

The advantage of having an Address Server 212 assigning NAPT addresses on-demand vis-à-vis assigning static NAPT addresses to ST ports is that a shared pool of addresses may be allocated to a network as a whole and statistical multiplexing gains can be extracted on the shared pool, thereby reducing the number of addresses that would have otherwise been required.

The Address Leasing protocol also provides a mechanism for the renewal of address leases. This ensures that uninterrupted communication is possible between ST ports for periods of time longer than the initial lease period.

Under certain circumstances, the Address Server 212 may experience loss of state due to a variety of reasons. To guard against the possibility of the same address being assigned to multiple ST ports at the same time, the protocol provides an asynchronous flush mechanism. This mechanism entails multicasting a message to all address clients served by the Address Server 212 to trigger the immediate expiry of any address leases assigned by the Address Server 212.

Of relevance to the subject of address translation over the satellite network is the concept of an Address Domain. An address domain can be understood to be a collection of ST-ST ports that use consistent (compatible) IP addressing such that no address translation is required over the satellite network for communication between them. Addresses assigned by the Address Server 212 are associated with specific destination address domains. An address assignment to a ST port for a particular destination address domain is valid for communicating with all ST ports that are in the same address domain.

Since the use of address translation impacts route distribution, there is a strong interplay between the Redirect Routing and Address Leasing protocols. For instance, an ST port may need to obtain an NAPT address via the Address Leasing mechanism prior to disseminating a Redirect route to a peer ST port.

An ST running ISRP is assumed to have a route table, containing information about routes to a number of destination networks reachable from the ST. For ISRP, each route described in the route table, in an exemplary embodiment, includes: IP address of the destination, address of the next-hop, a cost-metric, and a route change flag. For IPv4, a four-octet IPv4 address and a four-octet network mask, together specify the network/subnet number of the destination. For IPv6, a variable-length network prefix of the destination is used. The address of the node is specified as the next-hop for forwarding packets to the destination; this address can be a sixteen-octet satellite next-hop address. Alternatively, the address may be an IPv4 or IPv6 address of a next-hop router reachable over the terrestrial interface. The cost-metric associated with the route indicates the cost of forwarding an IP packet to the destination along the route specified by this entry. The route change flag indicates whether a route has recently changed.

In one embodiment of the present invention, the route table at the ST has logical divisions: one describing routes reachable over the air interface, and the other describing routes reachable over the terrestrial interface(s). Routes learned via ISRP are used to update only the part of the route table that describes connectivity over the air interface. Updates to the other part are considered to be the responsibility of the terrestrial routing protocol. ISRP specifies unrestricted read access to this section of the route table, allowing the protocol to access the above-mentioned information associated with all the routes described in this part of the route table. It is noted that this division is only a logical division; when implemented, a single physical database may be used.

As described with respect to FIG. 2, an ST can be pre-configured with a number of static routes including a default route. This may include routes towards "global" addresses managed by the NAT/NAPT function at the ST, for assignment on a temporary basis to hosts. ISRP can advertise any such pre-configured static routes on the air interface, with the exception that the default route is not advertised.

Because two different routing protocols are used at the ST at the different interfaces, protocol internetworking is required to communicate route changes learned at one interface using one protocol to the other interface using another protocol. This inter-conversion is specific to the terrestrial protocol that is being used. The operation of ISRP, however, is largely independent of the terrestrial protocol. A number of assumptions are made with respect to the execution of the ISRP. First, an external trigger signals the receipt of a terrestrial routing update. Second, this triggers the ISRP route client to re-evaluate whether sending of a route update over the air interface is warranted by any changes in terrestrial connectivity that may have occurred.

The ST also has the capability to indicate to the terrestrial routing protocol any change in connectivity over the air-interface, learned via ISRP routing updates obtained at the air interface. The terrestrial routing protocol accordingly makes an independent determination as to whether a triggered update is warranted (or if any other action is required) to communicate the route changes over the terrestrial interface. It is recognized that any terrestrial routing protocol can be used in conjunction with ISRP Routing. The general rules associated with inter-working between the ISRP Routing protocol and the terrestrial protocol are as follows. Route changes detected at the terrestrial interface by the terrestrial protocol are to be indicated to the ISRP protocol within a reasonable time; e.g., such that the time delay from the detection of route changes to their indication to the ISRP module is no worse than the maximum time delay allowed by the terrestrial routing protocol for route change propagation between two interfaces. Additionally, route changes learned over the air via ISRP Routing, once conveyed to the terrestrial routing protocol are processed in a manner similar to the behavior of the terrestrial routing protocol as if the route changes were learned using the same protocol.

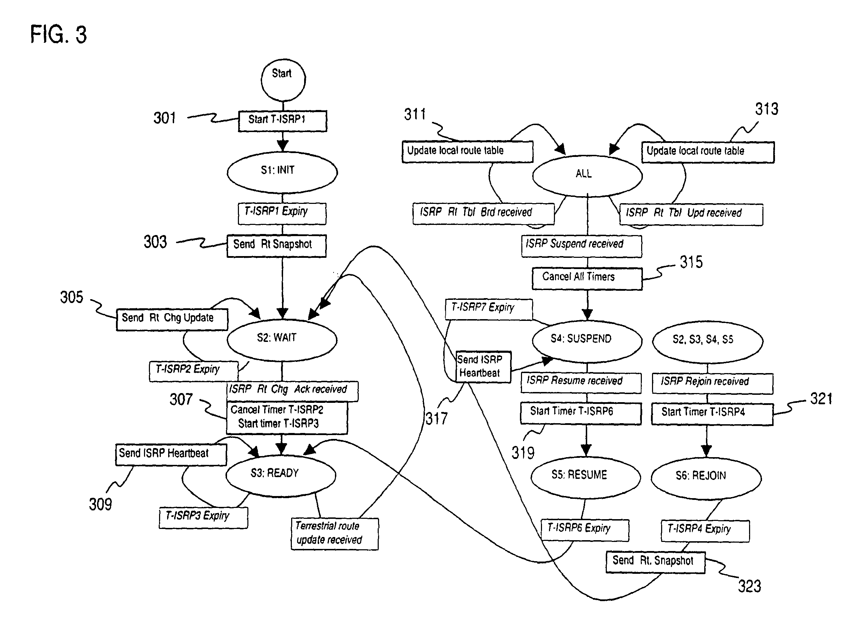

FIG. 3 is a diagram of a finite state machine of an Internal Satellite Routing Protocol (ISRP) client, according to an embodiment of the present invention. The ISRP route client maintains and operates on the following data during normal operation: route table version number, learned routes, changed terrestrial routes, Route Change Update/Route Snapshot, last route change update number, and various timers (which are detailed below). The route table version number is the route table version learned in the last successfully assimilated Route Table Update or Broadcast message received from the route server 215. This version number is used to determine if the route table at the route client is in line with the latest route database at the route server 215. The number is captured in the Route Change Update or Route Snapshot messages as well as Heartbeat messages that are sent to the route server 215. The ISRP route client also maintains a collection of learned routes; these routes are learned over the air interface, and are not yet committed to the local route table at the ST. This data contains part of a Route Table Broadcast message or a Route Table Update message that has not been completely received by the route client, and is awaiting committal. Associated with each database is a version number that indicates the version number that will be assigned to the local table when the routes in the database are committed to the local route table.

Additionally, the ISRP route client stores a collection of terrestrial routes that have recently changed and need to be communicated over the air interface. It is noted that this does not include any portion for which a Route Change Update message or a Route Snapshot message has already been sent and, therefore, for which an acknowledgement is pending. The ISRP route client also stores a copy of a Route Change Update message or a Route Snapshot message for which an acknowledgement from the route server 215 is pending.

The last route change update number is advertised in the last Route Change Update message or Route Snapshot message that is sent to the route server 215, for which a successful acknowledgement was received from the route server 215.

It is noted that in bootstrapping mode operation, the ISRP client does not require the route table version number, such that in any outgoing message, the route table version number is set to zero.

On the server side, the ISRP route server utilizes the following data during normal operation: Route table version number, committed routes, route update history, collected route updates, Out-of-Sync Clients, Active Clients, Expired Clients, Last Route Change Update Number learned per client, and various timers. The Route table version number represents the latest version of the central route database at the route server 215. The route database stores committed routes collected from all the route clients.

A database of Limited Update History is also provided by the ISRP route server, whereby each entry reflects route updates over a past version that was applied to the central database to bring it to a later version. This database is used to preserve a limited amount of past history of updates, enabling the route server 215 to send limited updates to route clients that are determined to be out of sync with the central route database.

The route server 215 also collects route updates from the route clients. These updates, in an exemplary embodiment, are committed to the central route database periodically. This period is known as the route collection period, and any updates received during this time are not committed. This collection of uncommitted route updates constitutes a database of collected updates.

The route server 215 stores a list of Out-of-Sync clients, which have reported an incorrect route table version number in the last message received from them. The reported route table version is also stored. In addition, the route server 215 maintains a list of active route clients. Associated with each active client is a running timer T-ISRP1 (such timers are described in Table 3, below). When this timer expires the route client is removed from the list and added to the list of expired clients. Further, the route server 215 may optionally keep track of the expired route clients using a list. This list permits the route server 215 to determine when these clients become active again as to trigger re-initialization of these route clients. Such a list can also be used to troubleshoot network problems.

As with the client side, the route server 215, when in bootstrapping mode, does not need the following data: route table version number, Limited Update History, and Out-of-Sync clients.

The ISRP route client maintains a number of timers during operation for both full Core Routing support and Bootstrapping support. Table 3 below enumerates exemplary timers employed in the operation of the ISRP:

**Table 3**

| **TIMER** | **PARAMETERS** | **VALUE** | **DESCRIPTION** |
|---|---|---|---|
| T-ISRP1 | X(min=30, max=n/a, def=30) | T = u(X/2, 3X/2) sec | This timer is started at system initialization to wait for terrestrial routes to be collected before sending a Route Snapshot message. The timer is stopped if an ISRP Suspend message is received. At expiry a Route Snapshot message is sent advertising all terrestrial routes. |
| T-ISRP2 | X{min=1, max=n/a, def=30} | T = X sec | This timer is started after sending a Route Change Update message or Route Snapshot message. The timer is stopped when a corresponding Ack is received from the route server. |
| | | | At expiry the Route Change Update /Route Snapshot is sent again until the number of failed, consecutive retries reaches a pre-configured value, at which time the connection with the server is deemed broken, and an alarm is raised. |
| T-ISRP3 | X{min=30, max=n/a, def=60} | T = u(X/2, 3X/2) sec | This timer is restarted after sending an ISRP Heartbeat message. The timer is stopped if an ISRP Suspend message is received, or when an ISRP Route Change Update message or Route Snapshot message is sent. At expiry an ISRP Heartbeat is sent. |
| T-ISRP4 | X {min=30, max=n/a, def=30} | T = u(0, X) sec | This timer is started after receiving an ISRP Rejoin message to wait for a random time before sending an ISRP Route Snapshot message. |
| | | | The timer is stopped if an ISRP Suspend message is received. At expiry a Route Snapshot message is sent advertising all terrestrial routes. |
| T-ISRP5 | X {min=3, max=n/a, def=3} | T = X min | This timer is started when the cost of a route learned over the satellite network is updated to infinity. At expiry, the associated route entry is deleted. |
| T-ISRP6 | | T = T-ISRP4 | This timer is started after receiving an ISRP Resume message to wait for a random time before sending a Route Change Update /Route Snapshot, if required. |
| | | | The timer is stopped if an ISRP Suspend message is received. At expiry a Route Change Update message or Route Snapshot message is sent, if required. |
| T-ISRP7 | | T = 2 * T-ISRP3 | This timer is started when an ISRP Suspend message is received and restarted at any subsequent receipts of an ISRP Suspend message, Route Table Broadcast or Route Table Update messages. |
| | | | The timer is stopped when an ISRP Rejoin or Resume message is received. At expiry an ISRP Heartbeat message is sent. |

As seen in FIG. 3, the timer T-ISRP1 is started (as in step 301) to enter an initialization state S 1 by the ISRP route client. The ISRP route client on initialization deletes all route entries in the route table with next-hop over the satellite network. Any pre-configured static routes are not deleted. The route table version number of the local route table is set to zero. Upon T-ISRP1 expiry, an ISRP Route Snapshot message is sent, as in step 303, transitioning into a Wait state S2. The purpose of the T-ISRP1 timer is to provide a period for collecting terrestrial updates, so as to avoid sending a barrage of route updates at startup.

During the Wait state S2, another timer, T-ISRP2, is commenced, during which a Route Change Update message is sent, per step 305. When an ISRP Route Change Acknowledgement (Ack) message is received, the T-ISRP2 timer is stopped, and a new T-ISRP3 timer is started (step 307). The route client thus enters a Ready state S3. In particular, if the route client receives a (positive) Route Change acknowledgement with a particular Route Change Update Number for the first time after sending a Route Change Update message or Route Snapshot message with the same Route Change Update Number (i.e., this particular acknowledgement was pending), and while timer T-ISRP2 is running, the route client stops the timer. The route client then checks if any changed routes (present in the collection of changed terrestrial routes) are pending to be sent. If there are, the route client sends exactly one Route Change Update message or Route Snapshot message (step 305) comprising as many routes as can fit in, and starts a T-ISRP2 timer.

T-ISRP2 expiry indicates that a time-out occurred while waiting for an acknowledgement for a Route Change Update or Route Snapshot message. The Route Change Update message or Route Snapshot message is sent again and timer T-ISRP2 is re-started. The retry procedure at T-ISRP2 expiry is attempted a maximum of T-ISRP2-Retries consecutive times. When the number of consecutive retries exceeds this configured value, the route client considers the link with the server to be broken. It may then go into the suspended state, recovery from which will be the responsibility of network management, or attempt recovery by re-initializing.

It is noted that any route changes that could not be sent at this time are preserved and will be reported in a subsequent Route Change Update to the route server 215. If no changed routes are pending to be sent, the route client starts timer T-ISRP3.

If the Route Change Acknowledgement message is received with a Route Change Update Number that does not correspond to the most recently sent Route Change Update message or Route Snapshot message for which an acknowledgment is pending, or if no acknowledgement is pending the message is disregarded.

If the route client receives a Route Change Acknowledgement indicating failure (i.e., negative acknowledgement), the route client reports the failure to an appropriate management entity (not shown) to take the appropriate action. If the failure code indicates the cause to be suspension of the route client, the route client enters the Suspend state S4. A negative acknowledgement indicates that the contents of the corresponding Route Change Update message or Route Snapshot message were not assimilated by the server, and therefore these are resent when the route client comes out of the Suspend state S4.

A route table update trigger is received when the terrestrial routing protocol updates the local route table. If either of the timers T-ISRP1 or T-ISRP4 is running, the trigger is disregarded. Otherwise, this trigger invokes the procedure for sending an ISRP Route Change Update message or Route Snapshot message described below -- if an acknowledgement for a previously sent Route Change Update message or Route Snapshot message is not pending and if timer T-ISRP6 is not running. If an acknowledgement is pending or if timer T-ISRP6 is running, the collection of changed routes is updated reflecting the new changes in terrestrial connectivity. It is not necessary for this trigger to be immediately generated at the instance a terrestrial update is received. In fact, according to one embodiment of the present invention, frequent terrestrial routing updates are suppressed for short intervals of time, such that an aggregate local route table update trigger is generated.

When the ISRP Route Change Update/Route Snapshot send procedure is triggered, the ST looks up its route table and collects all route entries with next-hop over the terrestrial interface that recently changed. A changed entry is indicated by the value of the route change flag associated with the route. It is noted that a Route Snapshot message is necessarily used as the first message after initialization and once a positive acknowledgement is received for the Route Snapshot message all subsequent route updates/changes are sent using Route Change Update messages. A maximal number of entries are compiled into a single Route Change Update message or Route Snapshot message and transmitted to the route server 215. The remaining entries are stored in a database of changed routes, and are sent at the next Route Change Update/Route Snapshot transmission opportunity. At this point, the timer T-ISRP2 is started, and the timer T-ISRP3 is stopped.

Each Route Change Update message or Route Snapshot message contains a Route Change Update Number, which is based on an incrementing counter. In a Route Snapshot message, the Route Change Update Number is set to one, for example. In each subsequent Route Change Update message, this number is incremented by one. However, if a Route Change Update message is not acknowledged by the server and times out, the number is not incremented in the next message that is sent. Also, the number is not incremented if the previous Route Change Update message was acknowledged if the acknowledgement was negative.

When the T-ISRP3 timer expires, an ISRP heartbeat message is sent, as in step 309. A transition from the Ready state S3 to the Wait state S2 occurs upon receipt of a terrestrial route update.

Incoming ISRP Route Table Broadcast messages are processed by starting a timer, T-ISRP7. In either scenario, the route client then compares the Route Table Version in the message with the Route Table Version of the local route table. If the route table version in the incoming message is less than or equal to the route table version of the local route table the message is discarded. It is noted that route table version wrap-around is handled by the route server 215 by suspending and then rejoining the route clients, before sending a Route Table Broadcast message. It is of no concern if an Update is sent after wrap-around, since the Update message specifies the base version. If the route table version in the message is greater than the route table version of the local route table, the local route table needs to be updated (per step 311).

The local route table update involves first unmarking the route change flag of all existing entries in the route table with next-hop over the satellite network. As routes are added or modified the associated route change flags are set to identify the updated routes. At the completion of processing of the Route Table Broadcast message, if this flag is not set for an entry, the associated entry's cost is updated to infinity and a timer T-ISRP5 is started to garbage-collect the entry. T-ISRP5 expiry is handled by deleting the associated route entry from the route table.

Next, the route advertisements received in the Broadcast message are used to reconstruct the route table. The broadcast message may contain multiple advertisements (with distinct next hop addresses) for the same network address-mask pair. The route client is expected to update the route table with the route advertising the least cost for a particular network address-mask pair. Before updating the route table with a learned entry, the route client may modify the cost of the route to reflect the cost of the next-hop. In the simplest case, an increment of the cost by one may be sufficient, assuming the cost metric advertised is the number of hops to reach the destination. For example, if RIP is being used, changing the cost of a satellite hop to a value different than the normal value of one impacts RIP operation since infinity is approached more quickly.

The resultant best route for each network address-mask pair replaces the existing route for the same network address-mask pair, if such a route exists. The route change flag for the route entry that was unset at the commencement of the Route Table Broadcast assimilation is set. Otherwise, the route is simply added. If the cost of the route thus inserted is infinity, timer T-ISRP5 for the entry is started. At the expiry of this timer the route entry are deleted.

The route server 215 may split its route table across multiple broadcast messages (denoted as "chunks"). The route client has the responsibility of maintaining a history of Route Table Broadcast sequence numbers of the latest incompletely received Route Table Broadcast message (i.e., the Route table broadcast with the highest version number seen), if a Route table update with a higher version has not been received. The history permits the route client to determine if all the chunks of the route table broadcast message have been received. When all chunks have been received, the route client deletes the history, commits the routes received in the broadcast, and updates the version number of the local route table. As each chunk is received, it is buffered in the database of learned routes. When all the chunks have been received, the buffered routes are processed in the fashion described earlier and the route changes are committed to the local route table. According to one embodiment of the present invention, a Route Table Broadcast message is buffered until the message is completely received. To reduce the memory requirement at the ST, the route client may process each chunk as the chunk is received to discard the redundant route entries from the buffer of learned routes. As each chunk is received, the chunk is processed entry by entry to determine whether that entry needs to be buffered. The entry needs to be buffered only if it is the best route among the routes learned (from the same Route Table Broadcast) for the same destination network address-mask pair. At the completion of Broadcast processing, an external trigger is generated to notify the terrestrial routing protocol of a routing update.

The route table version number in an incoming Route Table Broadcast message is checked to identify the situation, and to invoke appropriate handling, when a Broadcast-set processing has already commenced because of the earlier receipt of a chunk of the same Broadcast-set. If the route client has not received all the chunks of a route table broadcast, but receives a Route Table Broadcast message with an even higher Route Table Version, the client will delete the history collected thus far, including any buffered routes that comprise an incompletely received Route Table Broadcast message. The newly received broadcast will then be processed as usual. If the route client has not received all chunks of a Route Table Broadcast message and receives a Route Table Update with a base version number that is higher than the version number of the incompletely received Broadcast, the newly received Update is not processed.

As evident from FIG. 3, incoming ISRP Route Table Update messages are handled in similar fashion as that of ISRP Route Table Broadcast messages. Namely, if timer T-ISRP7 is running, the timer is restarted. Also, the route client compares the Route Table Version in the message with the Route Table Version of the local route table. If the route table version in the incoming message is less than or equal to the route table version of the local route table, the message is discarded. However, if the route table version in the message is greater than the route table version of the local route table, and the base route table version in the message matches the local version, the route table is updated, as in step 313.

The update involves replacing the entry in the route table for a certain network address and mask pair, by the corresponding entry (i.e., with the same network address and mask), in the received message, if one exists, and the cost of the existing route is more than the (adjusted) cost of the new route. Since an update message may contain multiple routes for the same destination, the best route is used to replace the pre-existing route. Also if the update contains a route reflecting a new cost for the same next-hop as the pre-existing route in the route table, the cost is updated to the new one before considering other routes in the update message.

If a matching entry does not exist, the route is added to the route table. The cost of the route is adjusted appropriately. If the route inserted in the route table has a cost of infinity, timer T-ISRP5 is started to garbage-collect the entry at timer expiry. As an entry is updated or added, the associated route change flag is set.

As in the case of the Route Table Broadcast messages, the route server 215 can send the route table update across multiple Route Table Update messages as chunks.

If the route client receives an ISRP Suspend message, the route client will not send any ISRP message to the route server 215, with the exception of ISRP Heartbeat message with suspend indication, until it subsequently receives an ISRP Rejoin message or an ISRP Resume message. On receiving an ISRP Suspend message, any active T-ISRP1, T-ISRP2, T-ISRP3 and T-ISRP4 timers are canceled, per step 315, and the Suspend state S4 is entered. If the timer T-ISRP7 is running, the timer is restarted. Upon expiration of the T-ISRP7 timer, the route client sends an ISRP Heartbeat message to the route server 215, per step 317. The route client remains in the Suspend state S4. The ISRP Heartbeat message contains the version number of the local route table, as well as the same route change update number as the one sent in the last positively acknowledged ISRP Route Change Update message or Route Snapshot message. The timer T-ISRP3 is restarted if the route client is not in the Suspend state S4, otherwise timer T-ISRP7 is restarted.

Any history of incompletely collected route table broadcast or update message is preserved, as the route client processes any Route Table Broadcast or Update messages received after a Suspend message in the usual fashion. Any changed terrestrial routes remaining to be sent are preserved, as well as any history of an unacknowledged Route Change Update message or Route Snapshot message.

In the Suspend state S4, when the route client receives the first ISRP Resume message after receiving an ISRP Suspend message, the route client resumes normal operation, whereby Timer T-ISRP7 is stopped. The route client then, per step 319, starts a timer T-ISRP6 to wait for a random time before sending any Route Change Updates/Route Snapshot messages, if required, thereby entering the Resume state S5. If an ISRP Resume message is received when the route client is not in the Suspend state S4, the message is disregarded.

From states S2-S5, a receipt of an ISRP Rejoin message triggers the start of a timer T-ISRP4 (per step 321) and a transition into a Rejoin state S6. When the route client receives the ISRP Rejoin message when neither timer T-ISRP1 nor timer T-ISRP4 is running, the client deletes all dynamically learned route entries with next-hop over the satellite network from its route table and changes the route table version number to zero. The history associated with incompletely received Route Table Broadcast or Update messages is also deleted, including any partially collected Broadcasts messages. Any changed terrestrial routes that were not communicated to the route server 215 are deleted, as is any past history of an unacknowledged Route Change Update message or Route Snapshot message.

The route client then starts timer T-ISRP4 to wait for a random time before sending a Route Snapshot. Upon T-ISRP4 expiry, the route client sends a Route Snapshot, as in step 323. Any ISRP rejoin received when either timer T-ISRP1 or timer T-ISRP4 is running is disregarded.

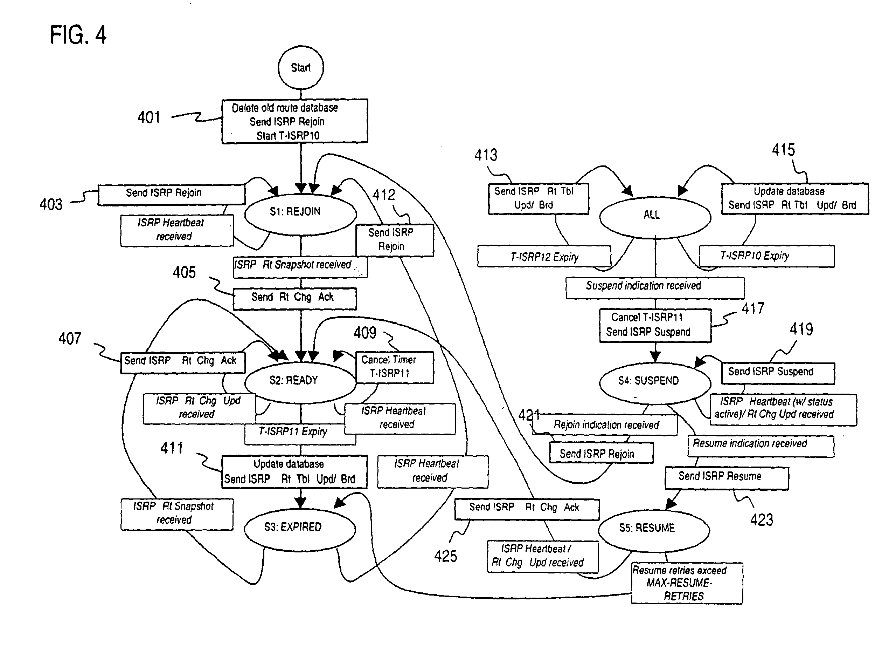

FIG. 4 is a diagram of a finite state machine of an Internal Satellite Routing Protocol (ISRP) server, according to an embodiment of the present invention. The route server 215 on initialization deletes all the routes collected over the space link, per step 401, and then sends a multicast ISRP Rejoin message to all route clients, thereby transitioning to a Rejoin state S1. If an ISRP heartbeat is received, the route server 215 sends an ISRP Rejoin message to the route clients (step 403). The route server 215 then starts timer T-ISRP10.

Table 4, below, lists the timers utilized by the route server 215.

**Table 4**

| **TIMER** | **PARAMETERS** | **VALUE** | **DESCRIPTION** |
|---|---|---|---|
| T-ISRP10 | X{min=120, max=n/a, def=120} | T=X sec | This timer is started after receiving a Route Change Update message or Route Snapshot message when the timer is not already running. The timer is stopped when a triggered update is sent. |
| | | | When the timer expires either of Route Table Broadcast/Route Table Update may be sent. For Bootstrapping mode: Timer expiry triggers the incorporation of all collected routes and route changes into the local route table. |
| T-ISRP11 | X{min=1, max=n/a, def=5} | T=X min | This timer is started on a per client basis, when an ISRP Heartbeat message or an ISRP Route Change Update /Route Snapshot is received from the route client. The route server expects to receive another ISRP Heartbeat message or Route Change Update /Route Snapshot from the route client before the expiry of this timer. |
| | | | The timer is re-started if a Route Change Update /Route Snapshot or a Heartbeat message is received from the route client. At expiry the route client is considered to be non-reachable and routes advertised by the route client are deleted. |
| T-ISRP12 | X{min=1, max=30, def=5} | T=X sec | This timer is started when a route client message is received with the incorrect route table version number. |
| | | | Timer is stopped at T-ISRP10 expiry. Expiry of this timer triggers sending of Route Table Update/Broadcast messages by the server to the route clients that advertised the incorrect route table version. |
| T-ISRP13 (Optional) | X{min=3, max=n/a, def=3} | T=X sec | This timer is started after sending a triggered update to the route clients. If another update is triggered before the timer expires, the update is suppressed till the expiry occurs. At timer expiry a Route Table Broadcast/Update is sent, if required. |
| | | | For Bootstrapping mode: The timer is started after a triggered update is applied to the local route table, rather than after sending a triggered update to clients. At expiry of this timer, an update to the local route table is made, if required. |

Upon receipt of an ISRP Route Snapshot message from a route client, the route server 215, as in step 405, replies with a Route Change Acknowledgement message, triggering a transition to a Ready state S2. This state is maintained when an ISRP Route Change Update message is received; the route server 215 acknowledges receipt of this message by transmitting an ISRP Route Change Acknowledgement message, per step 407. A Route Change Acknowledgement message is sent to acknowledge the receipt of a Route Change Update message or Route Snapshot message, irrespective of the route table version number received in the Route Change Update message. The message, in an exemplary embodiment, contains the version number of the current route database in the Route Table Version field. The Route Change Update Sequence number is copied from the corresponding field in the Route Change Update message or Route Snapshot message. The message can be sent as a unicast to the route client. If the contents of the Route Change Update message or Route Snapshot message were assimilated successfully success is indicated in the status code, otherwise failure is indicated and the appropriate failure code set, if known. A specific case occurs when a Route Change Update message or Route Snapshot message is received from a suspended route client. In this case, the appropriate code is set to indicate a suspended route client.

In the Ready state S2, the route server 215 cancels the timer T-ISRP11, per step 409, in response to receiving an ISRP heartbeat. T-ISRP11 expiry indicates that an ISRP Heartbeat message or an ISRP Route Change Update message or Route Snapshot message was not received for a certain period of time from the particular route client with which the timer instance is associated. The route server 215 assumes the link with the route client to be broken. The route server 215 then compiles a set of route entries, the compiled updates reflecting the update that would be received from the route client if the route client were to advertise entries indicating total loss of reachability for all previously advertised networks. This implies that for each entry in the route database with a next-hop towards the ST at which the route client is resident, an entry is generated by the route server 215 modifying the cost of the route to infinity. The original entry in the route database is deleted. Timer T-ISRP10 is stopped and these compiled entries and the routes collected thus far from other route clients are distributed to all route clients, and the route database is updated in exactly the manner that would be followed if T-ISRP10 had expired. The route client is added to the list of expired clients.

The procedure for processing of incoming ISRP heartbeat messages by the route server 215 is as follows. On receiving an ISRP Heartbeat message (not indicating a failure) from a route client that is not suspended (i.e., not present in the list of suspended route clients), timer T-ISRP11 associated with that route client is restarted. The route table version is then inspected to check if it is different from the version of the route database. If this version is less than the version of the route database, the route client is added to the list of route clients that have reported an incorrect route table version number in the current sync aggregation period. If no such list exists, it is created, and timer T-ISRP12 is started. T-ISRP12 expiry indicates the end of a sync aggregation period. One or more out-of-sync route clients were detected. The history of out-of-sync route clients is deleted.

If the version number in the heartbeat is greater than the version number of the route database, an ISRP Rejoin message is sent to the route client. Also, if the route change update number is not the same as the route change update number in the last Route Change Update message or Route Snapshot message that was positively acknowledged, an ISRP Rejoin message is sent to the route client.

If an ISRP Heartbeat message with a failure indication is received, a point to point Route Table Broadcast message is sent to the route client.

When in the bootstrapping mode, the route server 215 discards incoming Heartbeat messages with a route table version number other than zero, and need not provide further checking of the route table version number in incoming messages. Also, ISRP Heartbeat messages with failure indication are discarded.

At expiry of the timer T-ISRP11, the route server 215 updates its database of routes and sends such routes to the route clients via an ISRP Route Table Update message or ISRP Route Table Broadcast message (step 411). The route server 215 then enters an Expired state S3. The database includes routes advertised by each ISRP route client. This database is associated with a version number, such that a null database is assigned a version number of zero. A receipt of a Heartbeat message triggers the route server 215 to send an ISRP Rejoin message, per step 412, thereby returning to the Rejoin state S1.

The ISRP route clients may need to be updated with the latest route information either at the end of a collection period or at the end of a sync aggregation period. The route server 215 performs the following procedures to determine which message or messages need to be sent to update the route clients at the end of a route collection period -- this period may coincide with the end of the sync aggregation period. This occurs when T-ISRP12 is found to be running at T-ISRP10 expiry. T-ISRP 12 is stopped when this condition is detected.

T-ISRP10 expiry indicates the end of a route collection period. If timer T-ISRP13 is running, T-ISRP10 is simply restarted. Otherwise, the following processing is performed. Any running timer T-ISRP12 is stopped. Then, any required updates/broadcasts are compiled. After the required updates/broadcasts have been sent, the route database is updated with the collected route advertisements, the collected routes are stored along with the version number as part of the past history (this is only required if a Route Table Update was sent for the latest version number), any outdated update history is deleted.

At the end of the route collection period, the following processing is executed on the collected routes to determine the contents of a Route Table Update (that needs to be sent). Each route is examined to determine whether it is an old route for the same destination towards the same next-hop, or a new route (i.e., a corresponding route for the same destination previously advertised by the same route client exists). Receipt of an old route can result in all known routes for the same destination (with different next-hops) being sent out as part of the Update message. All routes, however, need not be sent if the route is a new route. If no out-of-sync route clients are present and a non-zero number of route updates were received in the previous collection period, the configured threshold is used to determine if a Broadcast message or an Update message is to be sent. This determination depends on the number of route entries that need to be updated at the route clients. If the threshold is exceeded a Route Table Broadcast message is sent, otherwise Route Table Update is sent multicast to the route clients.

If non-zero out-of-sync route clients are present (indicated by membership in the list of route clients that reported a route table version number less than the version number of the route database in the last sync aggregation period), the route server 215 makes a determination so as to optimally transmit the required updates to the route clients. This determination depends on the particular implementation; the route server 215 may transmit route updates in a variety of ways without violating the protocol. The route server 215 can send updates as a multicast or a unicast, using either Route Table Broadcast messages or Route Table Update messages.

By way of example, one approach to determining how to send the route updates is described as follows. At the end of the route collection period, the route server 215 builds a table indicating the number of route clients needing updates since a specific version. The number of route clients needing a certain incremental update-set (corresponding to a specific route database version) is then accumulated. A configured threshold is set to indicate whether, for a given number of route clients, the update/broadcast message should be sent as a unicast or a multicast message. All the incremental update-sets that are determined to be sent using multicast per this threshold are sent as multicast messages -- one multicast for each incremental version update. The decision to send a Route Table Broadcast message or a Route Table Update message is made depending on the number of route entries that need to be updated in each incremental version update. If a multicast Route Table Broadcast message is sent, no other updates need to be sent. For the incremental update-sets that are determined to be sent using unicast messages, a single unicast message is constructed for each route client containing the aggregate of the updates required in this class. If the total number of route entries in this aggregate update exceeds the threshold, a unicast Route Table Broadcast message is sent to the route client.

The route server 215 collects route advertisements in the form of Route Change Update messages from each route client, without re-distributing them, for a certain time period (known as the route collection period) indicated by the timer T-ISRP10. This timer is started when a Route Change Update message or Route Snapshot message is received, if the timer is not already running. According to an embodiment of the present invention, these collected route updates are maintained separately from the most current route database.

When the timer T-ISRP 10 expires, the route server 215 needs to either send a Route Table Broadcast message or a Route Table Update message to the route clients (per step 413), to update their route tables. Which type of message is sent by the route server 215 depends on a number of factors including, for example, the size of the routing update collected during the last collection period. It is recognized that transmission of an Update message is generally preferable over a Broadcast message, in that the Update messages minimize the amount of traffic over the satellite network. After sending either of these messages, the route database is updated with the entries collected over the last collection period, as in step 415.

The update process involves replacing the entry in the database with a particular next-hop address for a particular network address and mask pair with the corresponding entry (with identical next-hop address for the same network address and mask pair) in the collected updates. If no matching entry is found in the route database, the entry is added to the database. If the updated entry indicates a cost of infinity the entry is deleted from the route database. The route database version number is then incremented. It is noted that the route server may preserve a sent Route Table Update message in the database of update history for later use if required.

Each incoming ISRP Route Change Update message or Route Snapshot message is checked to verify that the route table version advertised in the message is the same as the version number of the route database at the route server 215 and that the Route Change Update Number is one greater than the last Route Change Update Number that has been positively acknowledged for that route client. It is noted that a Route Snapshot message with a Route Table Version other than zero is not permitted and is treated as a malformed message. Also the check against the route change update number is only performed for Route Change Update messages. Irrespective of the version number, the route entries in the route change update/snapshot are stored as part of the collected updates for the route collection period.

A Route Change Acknowledgment is sent to the route client, with the current version of the route database at the server and the Route Change Update Sequence number received in the Route Change Update message or Route Snapshot message. If the version number in the route change update is less than the version of the route database, then the route client has missed one or more route updates sent by the server. The route server 215 maintains a list of route clients that report an incorrect route table version number during a time-period referred to as the sync aggregation period. This period is determined by the value of the timer T-ISRP12, and its value is necessarily less than the collection period.

During a collection period, whenever the first message (from any route client) with an incorrect route table version is received, the route server 215 starts the timer T-ISRP12. At T-ISRP12 expiry, all the route clients that reported an incorrect route table version are either sent a point-to-point or multicast Route Table Broadcast message or a point-to-point Route Table Update message to bring the route clients up to sync with the route database at the route server 215. If T-ISRP10 expires before T-ISRP12, then T-ISRP12 is stopped. At this point the route server 215 may either send a single multicast Route Table Broadcast message to all route clients, or several point-to-point Route Table Broadcast messages and point-to-point/multicast Route Table Update messages as required.

For the case of deleted routes, optional special processing can be performed. When triggered updates are not implemented, all deleted routes are treated as normal route changes. If an ISRP Route Change Update with a deleted route (indicated by a cost of infinity) is received from a route client, it is treated as an immediate expiry of the route collection period. Any running timers T-ISRP10 and T-ISRP12 are stopped and the ISRP Route Table Broadcast/Update send procedure is performed. Thus, receipt of deleted routes results in triggered updates being sent out. However, the frequency of these triggered updates is limited by the use of a timer T-ISRP13. This timer is started whenever a triggered update occurs. If another triggered update should occur before the expiry of T-ISRP 13, the triggered update is delayed until the timer expires. T-ISRP13 expiry results in the server determining whether a triggered update needs to be sent. If this determination is in the affirmative, the route server 215 sends an Update/Broadcast, as described above, and the timer T-ISRP13 is re-started

If the route table version received in the Route Change Update message is higher than the version of the route database, or if the Route Change Update Number in the message is neither equal to, nor one plus the last Route Change Update Number received for that route client, a point-to-point ISRP Rejoin message is sent to the route client. Otherwise, if a Route Change Update message is received with a route change update number that is equal to the last route change update number received for that route client then a positive acknowledgement is sent to the client.

When a Route Snapshot message is received from a route client the list of active route clients is checked to determine if the sender is active. If so, this is an indication that the route table may contain one or more routes previously advertised by the sender. Such Route Snapshot messages are processed in the normal fashion at the end of the route collection period. However, the following special processing is done immediately at the receipt of such a Route Snapshot message. Essentially all routes in the route database earlier advertised by the same route client are deleted immediately.

When a Route Snapshot message is received from a route client that is not present in the server's list of active route clients, the message is treated as a regular update and, therefore, added to the database of learned updates. The routes in the message are committed at the end of the route collection period. The route client is deleted from the list of expired route clients, if present in that list, and added to the list of active route clients.

Upon receiving a Suspend indication message, the route server 215 cancels the timer T-ISRP11 and sends an ISRP suspend, as in step 417, entering a Suspend state S4. The ISRP Suspend message may be sent by the route server 215 to suspend route client operation at any time. If after sending an ISRP Suspend message to a route client, a message (with the exception of a heartbeat with status field indicating a suspended route client) is received from a route client, the route server 215 sends a unicast ISRP Suspend message to the route client. The route server 215 does not, however, need to send an ISRP Suspend message if a Route Change Acknowledgement message with the appropriate failure code was sent to the route client (in response to a Route Change Update message or Route Snapshot message being received from a route client while the route client was supposed to be suspended).

The Suspend state S4 is maintained when an ISRP heartbeat (with status active) message or Route Change Update message is received, triggering transmission of an ISRP suspend, per step 419. That is, if an ISRP Heartbeat message is received with the status field indicating a non-suspended route client, after sending an ISRP Suspend message to the route client, with no intervening ISRP Rejoin or Resume message being sent (i.e., the route client is in the list of suspended clients), an ISRP Suspend message is sent to the route client. If an ISRP heartbeat with the status field indicating a suspended route client is received from a route client that is not present in the server's list of suspended clients, (but is present in the list of active clients), either one of ISRP Resume or ISRP Rejoin message is sent (per steps 421 and 423) to the route client, depending on the route table version number in the message. Thus, from the Suspend state S4, the route server 215 transitions to the Rejoin state S1 upon receiving a Rejoin indication and transmitting the ISRP Rejoin message (per step 421).

If a Resume indication message is received, the route server 215 sends an ISRP Resume message to the route client, as in step 423, and enters a Resume state S5. The ISRP Resume message is sent, if an ISRP Rejoin message is not sent. An ISRP Resume message may be sent following an ISRP Suspend message as either a unicast to a single route client, or a multicast to all route clients. The route client is removed from the list of suspended clients and added to the list of active clients.

Each time an ISRP Resume message is sent in the above-stated condition, a counter is incremented. The counter tracks the number of consecutive times an ISRP heartbeat with suspend indicator is received from an active route client. When the counter exceeds a predetermined maximum threshold (e.g., MAX-RESUME-RETRIES), the route client is considered expired and removed from the list of active clients. The route server 215 transitions to the Expired state S3. If an ISRP Heartbeat message is received from an expired or an unknown route client, an ISRP Rejoin message is sent to the route client. The ISRP Rejoin message can be unicast to a single route client, or multicast to all route clients; the route client is removed from the list of suspended clients, if present.

Upon receiving a Heartbeat message or a Route Change Update message, the route server 215 transmits a Route Change Acknowledgement message to the route client, per step 425. This then initiates a transition to the Ready state S2.

If a Route Change Update message is received following sending of an ISRP Suspend message to the same route client (or after sending a multicast ISRP Suspend message), with no intervening ISRP Rejoin or Resume message being sent, a negative Route Change Acknowledgement message with the appropriate failure code is sent to the route client. If the Route Change Update message is received from an expired route client or for a route client for which there is no state, an ISRP Rejoin message is sent to the route client.

In bootstrapping mode, the route server 215 operates as follows. Route table version number at the route server 215 is zero. Incoming Route Change Update messages with a route table version number other than zero are discarded. At the end of the collection period Route Table Broadcast/Route Table Update messages are not sent, and no database of limited update history needs to be maintained. At the end of the collection period the local route table is updated with the collected routes/route changes. Triggered updates (for deleted routes) are optional. The processing of triggered updates (when this feature is implemented) is as given above except that Route Table Update/Broadcast is not sent when the triggered updates are committed; the local route table is updated with the collected routes/route changes.

During operation, the route server 215 may discover the lack of synchronicity (of data) with a particular route client. All such error cases can be handled by deleting the route client from the active list, if present, and deleting all the routes previously advertised by that route client in a triggered update fashion. Furthermore, the route server 215 sends an ISRP Rejoin message to the afflicted route client(s). Also, unexpected, but otherwise well-formed, ISRP messages may be received from route clients. The route server 215 disregards all such messages.

The system 200 can deploy redundancy for the access gateway 213 by utilizing a primary access gateway and a secondary (or back-up) access gateway. The redundancy architecture requires backing-up of route server state so that a switchover to the back-up access gateway does not require re-initialization of all ISRP routing for the network. ISRP Core Routing provides a mechanism whereby recovery from loss of all or a portion of the route server 215 state due to access gateway switchover is possible. This is accomplished through the use of the Route Change Update number in the following way. Each route client maintains a local route change update number that is associated with the latest state of all routes successfully advertised by it to the route server 215. Whenever a Route Change Update message or Route Snapshot message is sent, the route client increments the stored route change update number by one and advertises it in the Update/Snapshot message. The stored value is updated when a positive acknowledgement for the Route Change Update message or Route Snapshot message is received. The stored value is also advertised in any Heartbeat messages sent.

The route server 215 maintains the route change update number corresponding to the last positively acknowledged Route Change Update message or Route Snapshot message received from the route client. This number is compared with the number received in any subsequent Route Change Update message or Route Snapshot message and Heartbeat message to determine if any loss of state of routes advertised by that route client has occurred. If loss of state is detected then the route client is instructed to rejoin by sending a point-to-point ISRP Rejoin message to the client.

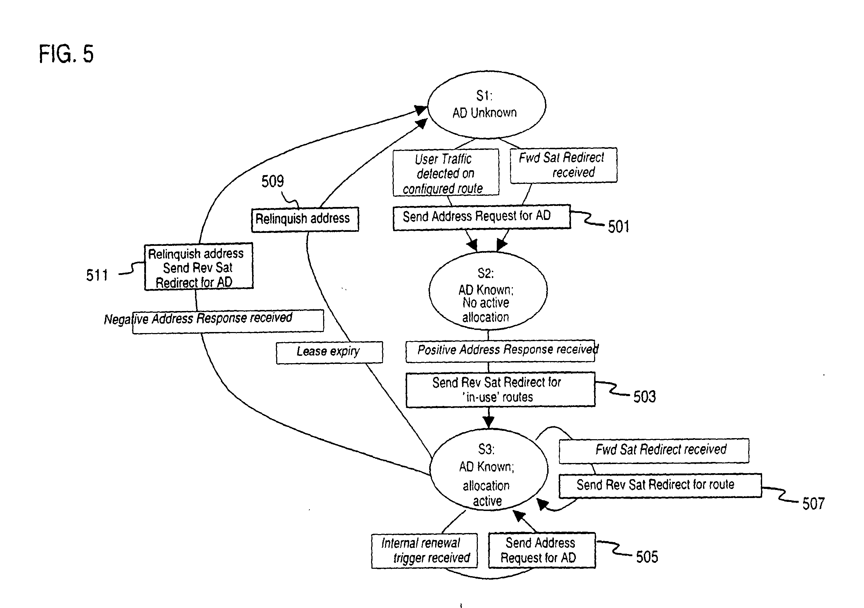

FIG. 5 is a diagram of a finite state machine for an Address Lease Protocol client, according to an embodiment of the present invention. The ST port maintains state of NAPT address assignment validity for all known destination address domains (AD) for which NAPT allocations have not been performed by static configuration of the ST port. A "known" destination address domain is one for which either a valid (unexpired) NAPT allocation exists, or an Address Request has been made to the Address Server 213 (and therefore an Address Response is pending).

In state S1, the address domain (AD) is unknown. An Address Request is generated for an "unknown" destination address domain in the following two cases. First, an Address Request is generated and sent for an address domain D*ᵢ* when a Forward Satellite Redirect is received, step 501, with a route pointing towards address domain D*ᵢ* and no other route exists at the ST port towards address domain D*ᵢ*. An Address Request can also be generated for an address domain if user data arrives for an over-the-air route that points towards that address domain. In both cases an Address Request is generated and the address domain becomes "known" (state S2).

In the state S2, the address domain is known, in which no active allocation exists. A transition to an AD Known: Allocation Active state, S3, is made when a positive Address Response is received, invoking a transmission of a Reverse Satellite Redirect message for "in-use" routes, as in step 503.

An ST port may heuristically determine if the address lease of a known address domain should be renewed. At this time an Address Request is sent, per step 505, to the Address Server 213 for that address domain. It is noted that in one contiguous lifetime of an address, lease extension may be attempted only once. If lease extension is unsuccessful (that is either an explicit negative Address Response is received, or the Response is not received at all and the number of allowed retries of the Address Response are expended) then the address is released at the end of the lease and the address domain once again becomes unknown (entering state S1).

The conditions for when a Reverse Satellite Redirect is generated are now considered. The receipt of a positive Address Response for an address domain D*ᵢ* results in Reverse Redirect messages being generated towards next-hop ST ports in the same address domain D*ᵢ*. (These next-hop ST ports are the ones corresponding to routes toward D*ᵢ*.) Reverse Redirects messages are transmitted towards next-hop ST ports which are pointed to by routes that have been heuristically determined to be "in-use" by the ST port. The "not-in-use" routes for which Reverse Redirect are not sent at Address renewal may become "in-use" later while the address lease is still valid. In this case, the Reverse Redirect is sent for these routes as and when they become in-use.

Alternatively, Reverse Redirects messages can be sent towards all next-hop ST ports. This approach can be viewed as yet another heuristic to determine "in-use" routes. Also it is noted that, in general, only one Reverse Redirect is sent per next-hop ST port; however, another embodiment of the present invention can involve transmission of multiple Reverse Redirect messages to the same next-hop, one per route. In this latter case, multiple Reverse Redirect Acknowledgements will be expected even from the same next-hop, one for each Request sent.

A Reverse Satellite Redirect message is also generated when a negative Address Response is received. In this case, the Satellite Redirect message is sent at least to all next-hop ST ports that could potentially have unexpired routes as a result of Reverse Satellite Redirect messages that were previously sent. Once again, one heuristic could be to send the Reverse Satellite Redirect message to all next-hop ST ports pointed to by routes towards the applicable destination address domain. All such Reverse Satellite Redirect messages can use a cost of infinity and a TTL of zero.

Further, a Reverse Satellite Redirect message is transmitted when a Forward Satellite Redirect message is received (step 507) with a route towards a known address domain, and when the next-hop ST port indicated in the route is not already pointed to by any other already installed route towards the same destination address domain. A prerequisite for the Reverse Satellite Redirect to be generated in this case is that a valid address assignment exists for this address domain. If no active NAPT address exists, then the Reverse Redirect message is not generated.

Regardless of the trigger of the Reverse Satellite Redirect message, the TTL in the message is always set to the lease remaining for the assigned NAT address of the applicable destination address domain. Since the lease of an address expires immediately when a negative Address Response is received, in this case the lease is considered zero and the TTL advertised is zero. When the Reverse Satellite Redirect message is sent for an in-use route, the TTL of that route (provided the route is a dynamic route learned through a Forward Satellite Redirect) is set to the TTL indicated in the Reverse Redirect.

From the AD Known state S3, expiration of the Lease Timer for the particular leased address, results in relinquishing the address, as in step 509. Also, receipt of a negative Address Response triggers the address client to relinquish the address, per step 511; this step further entails sending a Reverse Satellite Redirect message.

The Address Server 213 additionally supports an Address Flush procedure whereby the address clients relinquish all the NAPT addresses obtained from the Address Server 213. The Address Server 213, at restart, sends an Address Flush message to all the address clients that it serves. The Address Server 213 can be configured with a multicast address (or a group of multicast addresses) for this purpose. The Address Server 213, after sending an ISRP Address Flush, starts timer T-ISRP23 and enters a guard phase. The purpose of this phase is to allow sufficient time for the Address Flush to be processed by the address clients, and all addresses previously allocated by the Server to be released. During this guard phase any Address Requests arriving at the Address Server 213 are rejected. Also, any Address Requests are rejected with a TTL of zero. After the expiry of timer T-ISRP23, all addresses are added to the pool(s) of available addresses and normal allocation phase may commence.

The address client on receiving an Address Flush message is required to relinquish all the NAPT addresses obtained dynamically from the Address Server 213. To guard against the possibility of an Address Flush message being lost, the Address Server 213 can re-send the message multiple times at startup. For example, this is can be accomplished by sending the Address Flush again (T-ISRP23)/2 sec after the initial Address Flush was sent, and again sending it immediately after the expiry of T-ISRP23. If this mechanism is used, then the T-ISRP23 should not be restarted when successive Address Flush messages are sent.

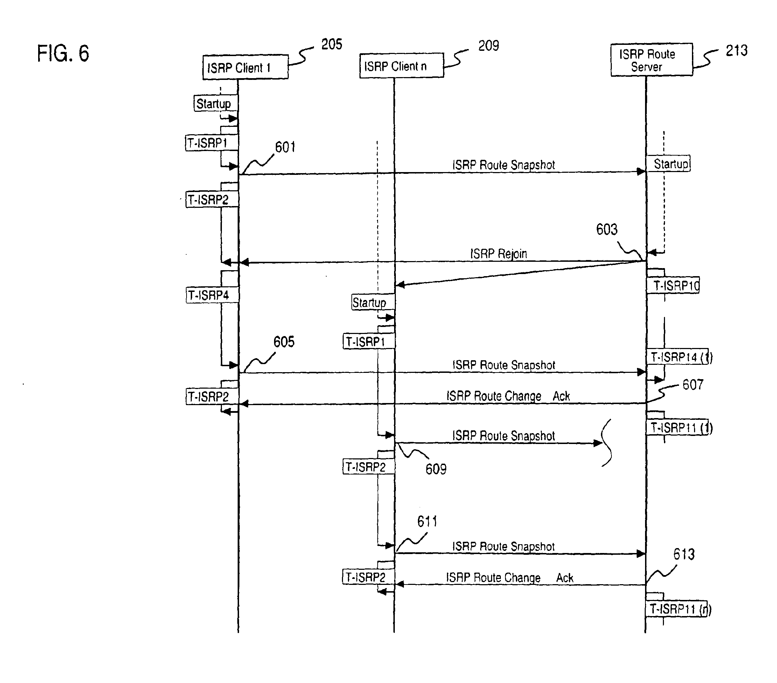

FIG. 6 is a sequence diagram of an initialization process between a route server and participating route clients, according to an embodiment of the present invention. As shown, multiple route clients (1..*n*) communicate with an ISRP route server 215; for the purposes of explanation, the ISRP client 1 is deployed with ST 205 (FIG. 2) and ISRP client *n* resides in ST 209. Also, the ISRP route server is server 215 in the system of FIG. 2. The STs 205, 209 are thus configured to operate according to the finite state machine described in FIG. 3. Likewise, the route server 215 operates in accordance with the finite state machine of FIG. 4.

In this initialization process, after expiry of T-ISRP1, the ST 205 transmits an ISRP Route Snapshot message, as in step 601 to the route server 215. The ST 205 now starts timer T-ISRP2. Next, in step 603, the route server 215 responds with a multicast of an ISRP Rejoin message to STs 205, 209. Upon expiration of timer T-ISRP4, the ST 205 forwards another ISRP Route Snapshot message to the route server 215, per step 605. In turn, the route server 215 acknowledges, as in step 607, with an ISRP Route Change Acknowledgement message.

With respect to the ST 209, an ISRP Route Snapshot message is sent upon expiration of its timer T-ISRP1 (per step 609). However, the message is damage or lost; accordingly, after expiration of timer T-ISRP2, another ISRP Route Snapshot message is transmitted, per step 611, to the route server 215, which responds with an ISRP Route Change Acknowledgement message (step 613).

At this point, the route server has knowledge of all the routes from the clients 205, 209.

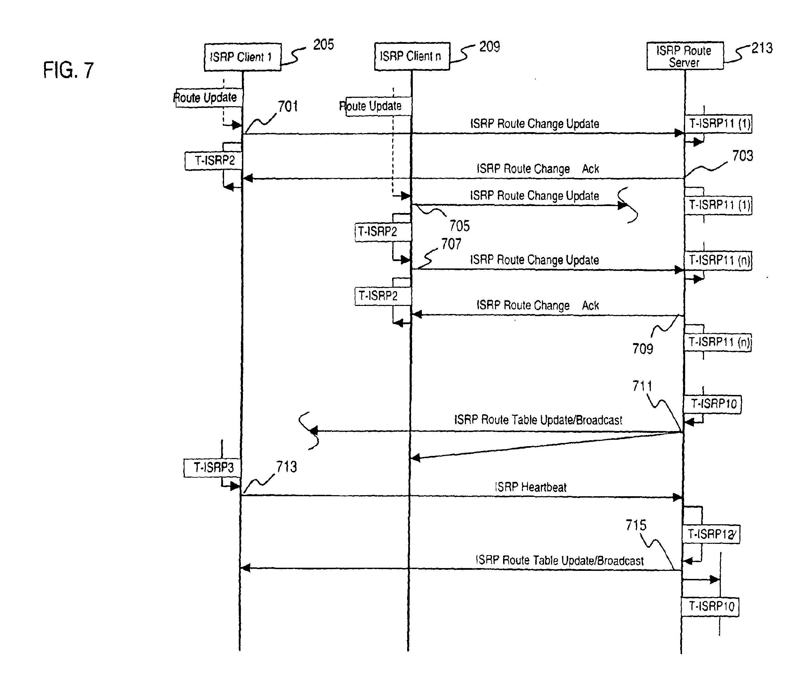

FIG. 7 is a sequence diagram of a route change update collection and distribution process among a route server and multiple route clients, according to an embodiment of the present invention. Continuing with the example of FIG. 6, the ST 205 determines that a terrestrial route has changed, thus, triggering sending of an ISRP Route Change Update message to the route server 215, per step 701. Upon receipt of this message, the route server 215 responds, as in step 703, with an acknowledgement (i.e., ISRP Route Change Ack). Under this scenario, the ST 209 also notes a route change, and accordingly, attempts to send an ISRP Route Change Update message to the route server 215, as in step 705. Because the first attempt is unsuccessful, the ST 209 tries again, per step 707. This time, the route server 215 successfully receives the ISRP Route Change Update message, and replies with an ISRP Route Change Ack (step 709).

In step 711, the route server 215 transmits the updated route tables via an ISRP Route Table Update message or ISRP Route Table Broadcast message. As shown, the message does not reach the ST 205. Consequently, in step 713, the ST 205 transmits an ISRP Heartbeat message to the route server 215, causing the route server 215 to retransmit the ISRP Route Table Update message or ISRP Route Table Broadcast message (per step 715).

FIG. 8A is a sequence diagram of a redirection process without dynamic NAPT Address Assignment, according to an embodiment of the present invention. In step 801, a satellite terminal (ST)-1 (e.g., ST 205) transmits a packet to the hub ST 205. The hub ST 205 responds with an ISRP Forward Satellite Redirect message, per step 803. In step 805, the ST-1 sends an ISRP Reverse Satellite Redirect message to the ST-*n* (e.g., ST 209), which acknowledges with an ISRP Satellite Redirect Ack message (step 807). Next, in step 809, the ST-1 transmits an IP packet destined for ST-*n* to the ST-*n*, which exchanges its own IP packet, per step 811.

If the packet that is destined for ST-*n* reaches the hub ST 205 (step 813), the hub ST 205 attempts to respond with an ISRP Forward Satellite Redirect message, per step 815. In step 817, the ST-1 again transmits the IP packet to the hub ST 205, which in turns submits an ISRP Forward Satellite Redirect message (steps 817 and 819). Next, the ST-1 issues an ISRP Reverse Satellite Redirect message, as in step 821, invoking timer T-ISRP20 for tracking a timely acknowledgement. Upon expiration of the T-ISRP20 timer, the ST- 1 resends, as in step 823, the ISRP Reverse Satellite Redirect message to the ST-*n*. Because the ST-*n* receives this message successfully, the ST-*n* responds with an ISRP Satellite Redirect Ack message (step 825).

The above process describes a scenario in which no network address translation is needed to route the data within the satellite network 200. However, in the case of inter-domain routing, NAT functionality is provided by the Address Server 213, as next described.

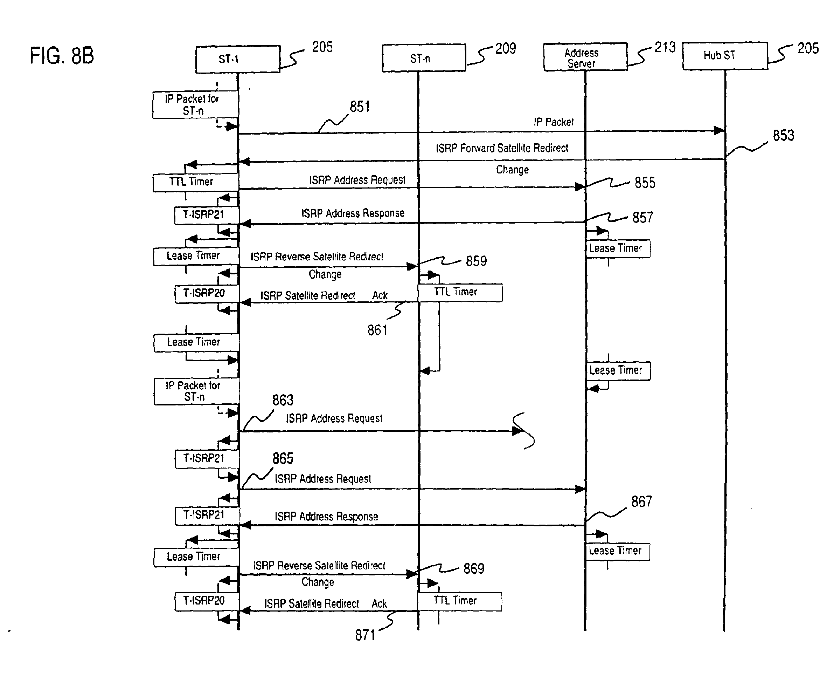

FIG. 8B is a sequence diagram of a redirection process with dynamic NAPT Address Assignment, according to an embodiment of the present invention. Under this scenario, the ST-1 transmits a packet that is destined for ST-*n* to the hub ST 205, per step 851. The hub ST 205 redirects this transmission by issuing an ISRP Forward Satellite Redirect message, per step 853, to the source ST, i.e., ST-1. Consequently, the ST-1 submits an ISRP Address Request message to the Address Server 213 to obtain the NAPT address, as in step 855. The Address Server 213, per step 857, responds with an ISRP Address Request message containing the NAPT address. At this point, the Lease Timers maintained by both the ST-1 and the Address Server 213 commence tracking the period when this assigned NAPT address is valid.

In step 859, the ST-1 transmits an ISRP Reverse Satellite Redirect message to the ST-*n*, which acknowledges with an ISRP Satellite Redirect Ack message (step 861). Upon expiration of the Lease Timer, the ST-1 seeks to renew the leased address through another issuance of an ISRP Address Request, per steps 863 and 865, in which the later attempt results in a successful acquisition of the NAPT address (step 867). In steps 869 and 871, the ST-1 communicates an ISRP Reverse Satellite Redirect message to the ST-*n*, and receives an acknowledgement via an ISRP Satellite Redirect Ack message from the ST-*n*.

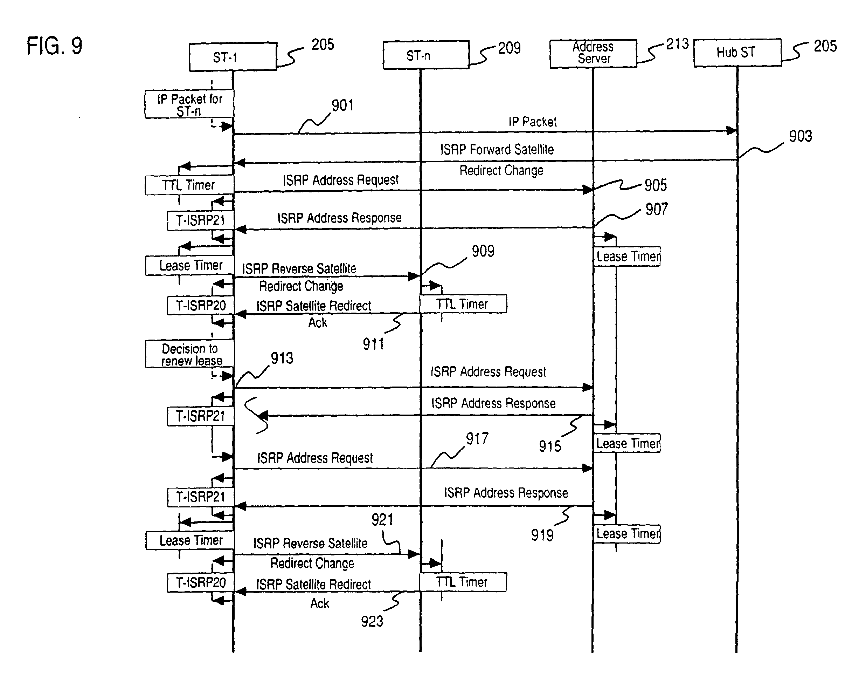

FIG. 9 is a sequence diagram of an address lease renewal process, according to an embodiment of the present invention. Frequently, an ST port may seek to extend the lease of a certain NAPT address for a particular address domain. Such a lease renewal facility would permit two ST ports to communicate continuously for times longer than allowed by the TTL of the address assignment for the applicable address domain.

It is recognized that there exists circumstances for keeping the TTL value sufficiently short. A short TTL value would allow for efficient address assignments when typical extranet sessions are short-lived. A short TTL value is also desirable for consistency reasons in the event of crashes of the Address Server 213 managing the address leases.

One approach for determining whether and when to renew lease of a certain address is to heuristically determine whether the need for an address would extend beyond that allowed by the current TTL value of the address. A simple heuristic could be to renew the route whenever traffic is detected that uses the address, and the current TTL value of that address is less than half of the original TTL assignment for that address.

Under the scenario of FIG. 9, a satellite terminal (ST)-1 (e.g., ST 205), as in step 901, transmits a packet to the hub ST 205, which in turn, responds with an ISRP Forward Satellite Redirect message, per step 903. In step 905, the ST-1 (address client) issues a request to obtain a NAPT address from the Address Server 213. In response to the request, the Address Server 213, per step 907, transmits an ISRP Address Response with the assigned NAPT address (e.g., a non-zero IPv4 address). At this time, both the ST-1 and the Address Server 213 start Lease Timers.

In step 909, the ST-1 sends an ISRP Reverse Satellite Redirect message to the ST-*n* (e.g., ST 209) which acknowledges with an ISRP Satellite Redirect Ack message (step 911).

Next, the ST-1 decides to renew the address lease. To extend the lease of a dynamically obtained NAPT Address to beyond the current TTL of the address entails the ST-1 (i.e., address client) sending an ISRP Address Request message to its Address Server 213, per step 913. This Address Request message specifies the non-zero NAPT Address currently assigned to the address client. This non-zero NAPT address (e.g., IPv4) indicates the request to be a "successive" Address Request.

As explained earlier, the address client after sending the Address Request (step 913) expects an acknowledgement within a configured time period (using timer T-ISRP21). If an acknowledgement is not received within this time-period (as is the case of step 915), the address client may retry the Address Request one or more times (step 917), with the number of retries allowed being the configured parameter indicated earlier. If the maximum number of retries have been exhausted and the latest retry fails too (i.e. a Response is not received), then the address renewal procedure for those addresses is aborted, and the original TTL values of those addresses are retained. These addresses are then expired per their TTL values.

An Address Server 213 receiving a successive Address Request will check if the request parameters concur with the state stored at the Address Server 213. In particular, it verifies that the NAPT address present in the message has been assigned to the address client sending the request. If not, the request must be rejected with a TTL value of zero, in effect invalidating the NAPT assignment immediately at receipt of the acknowledgement. Only after the request parameters have been validated to its satisfaction will the Address Server 213 grant the renewal request (by sending a positive ISRP Address Response). Once an acknowledgement is dispatched, no state is kept for that request other than noting the new lease for the NAPT address, if applicable.

If an address client receives a positive response for a successive Address Request (as is the case in this example, per step 919), the response is processed and the new TTL value incorporated for the address. It is noted that if the TTL value in a positive response for a successive request is zero, the address is deleted immediately on receipt of the response. If a negative response is received, the corresponding address assignment is considered void and the assigned address is immediately relinquished.

In this example, the ST-1 transmits an ISRP Reverse Satellite Redirect message to the ST-*n*, which acknowledges the message (steps 921 and 923).

The above address lease renewal mechanism is also applicable for renewing "No-NAT" assignments for address domains for which "No-NAT" was indicated in the Address Response from the Address Server 213. Such a null assignment is treated as a regular assignment for the purposes of determining lease validity and performing lease renewals.

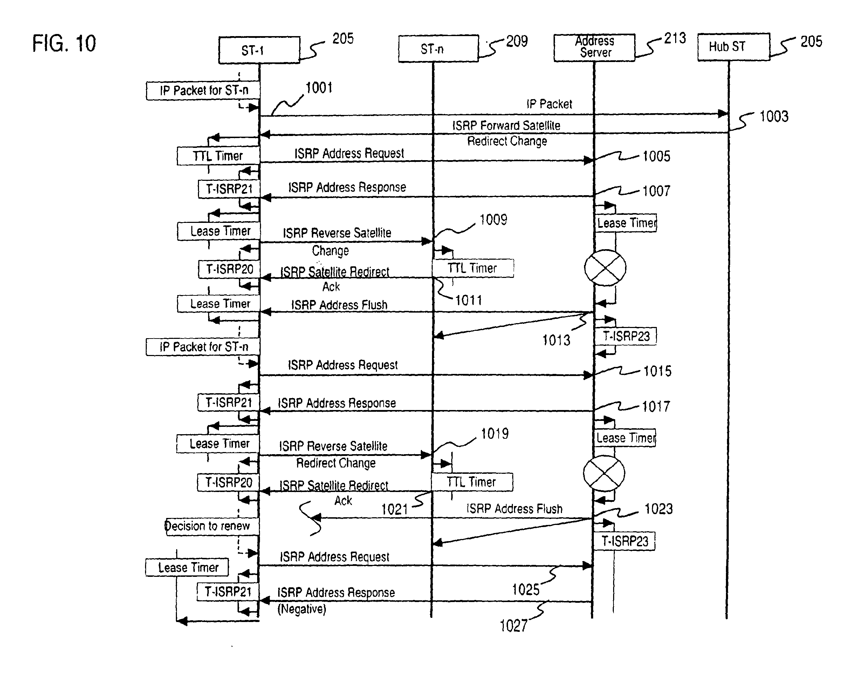

FIG. 10 is a sequence diagram of an address server initialization process, according to an embodiment of the present invention. A satellite terminal (ST) 1, as in step 1001, transmits a packet to the hub ST 205. In step 1003, the hub ST 205 responds with an ISRP Forward Satellite Redirect message. In step 1005, the ST-1 (address client) issues a request to obtain a NAPT address from the Address Server 213. In response to the request, the Address Server 213, per step 1007, transmits an ISRP Address Response with the assigned NAPT address. The ST-1 and the Address Server 213 start Lease Timers to track the period that the assigned NAPT address is valid for use by ST-1.

In step 1009, the ST-1 sends an ISRP Reverse Satellite Redirect message to the ST-n, and receives an ISRP Satellite Redirect Ack message, per step 1011, from ST-*n*.

The Address Server 213, as part of the initialization process, issues an ISRP Address Flush message to all of the STs, per step 1013, to force relinquishment of the outstanding assigned NAPT addresses. Thereafter, the ST-1 can request a NAPT address via an ISRP Address Request message, per step 1015, from the Address Server 213, which sends the requested NAPT address via an ISRP Address Response message (step 1017).

At this point, the ST-1 transmits an ISRP Reverse Satellite Redirect to install the route to the ST-1, per step 1019. This message is subsequently acknowledged by ST-*n*, as in step 1021.

In step 1023, the Address Server 213 issues ISRP Address Flush messages to the STs; in this example, the ST-1 never receives the message. As a result, when the ST-1 attempts to obtain a NAPT address through an ISRP Address Request message, per step 1025, the Address Server 213 sends a negative ISRP Address Response (step 1027).

As seen in the above discussion in FIGs. 3-10, a number of messages are utilized by the system 100 to convey routing information and to effect the satellite redirect mechanism in support of inter-domain routing: ISRP Route Table Broadcast, ISRP Route Change Update, ISRP Route Change Acknowledgement, ISRP Route table Update, ISRP Heartbeat, ISRP Suspend, ISRP Rejoin, and ISRP Satellite Redirect. Exemplary formats of these messages are described below.

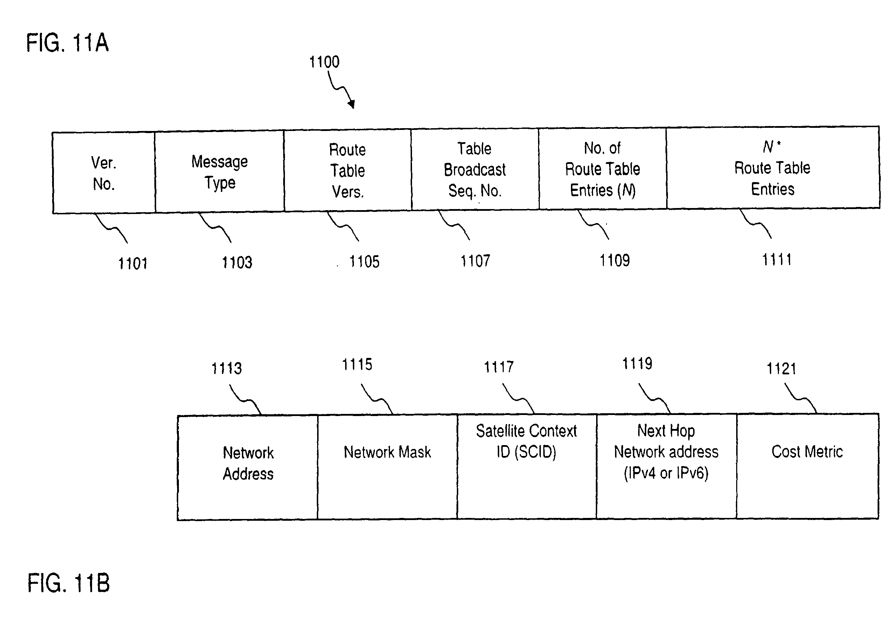

FIGs. 11A and 11B are diagrams of a Route Table Broadcast message and a format of a Route Table entry, respectively, used in a Satellite Routing Protocol, in accordance with an embodiment of the present invention. The route server 215 builds a single comprehensive route table and sends the ISRP Route Table Broadcast message to a given set of ST ports as identified by an IP multicast address. The route server 215 may use a Class-D Multicast Address (CMID) for IPv4 or an IPv6 Multicast address. The scenarios under which the route server 215 sends out ISRP Route Table Broadcast messages are discussed below. The behavior of the ST that receives the ISRP Route Table Broadcast message, is also detailed below. The value of INITIAL_ROUTE_TABLE is reserved for the ISRP Route Table Version number to indicate the initial route table.

As seen in FIG. 11A, the ISRP Route Table Broadcast message 1100 includes the following: an ISRP Version Number field 1101, an ISRP Message Type (Route Table Broadcast) field 1103, an ISRP Route Table Version field 1105, an ISRP Table Broadcast Sequence Number (with first/last indication) field 1107, a Number of Route Table Entries (N) field 1109, and N * Satellite Route Table Entries 1111.

Each table entry 1111, as shown in FIG. 11B, has the following format: a Network Address (e.g., IPv4 or IPv6) field 1113, a Subnet Mask field 1115, a Next Hop Network Address field 1117, a Satellite Context ID (SCID) field 1119, and a Cost Metric field 1121.

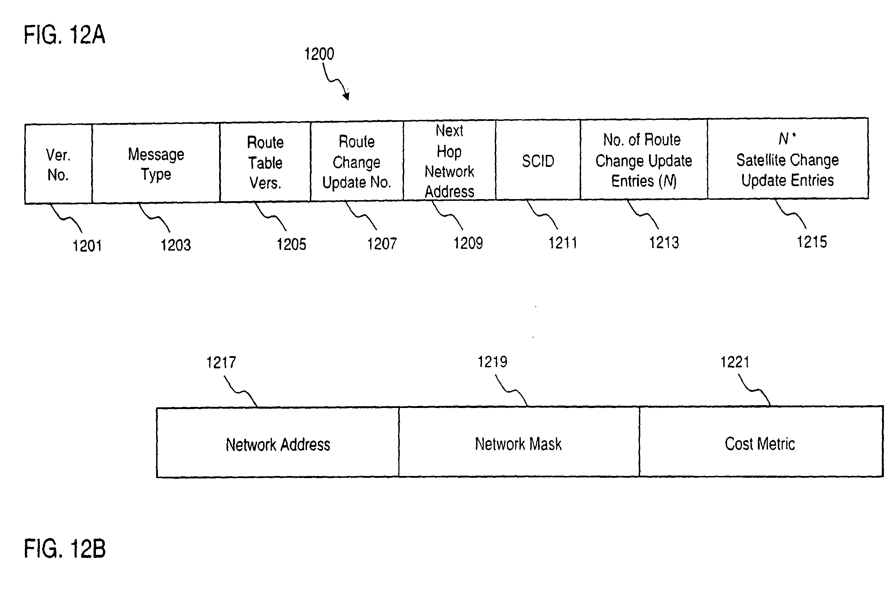

FIGs. 12A and 12B are diagrams of a Route Change Update message and a format of a route change update entry, respectively, used in a Satellite Routing Protocol, in accordance with an embodiment of the present invention. As RIP or OSPF at the ST recognize changes in the terrestrial networks connected to an ST, ISRP reports these changes to the route server 215 by way of a Route Change Update message. The message contains an update number that is used by the route server 215 to acknowledge reception of the ISRP Route Change Update message. According to one embodiment of the present invention, the Route Change Update message 1200 has the following fields (as shown in FIG. 12A): an ISRP Version Number 1201, an ISRP Message Type (Route Change Update) 1203, an ISRP Route Table Version 1205, an ISRP Route Change Update Number 1207, a Next Hop Network (IPv4 or IPv6) Address 1209, a Satellite Context ID (SCID) 1211, a Number of Route Change Update Entries 1213, and N * Satellite Route Change Update Entries 1215. A Satellite Route Change Update entry, as seen in FIG. 12B, includes a Network Address field 1217, a Network Mask field 1219, and a Cost Metric field 1221.

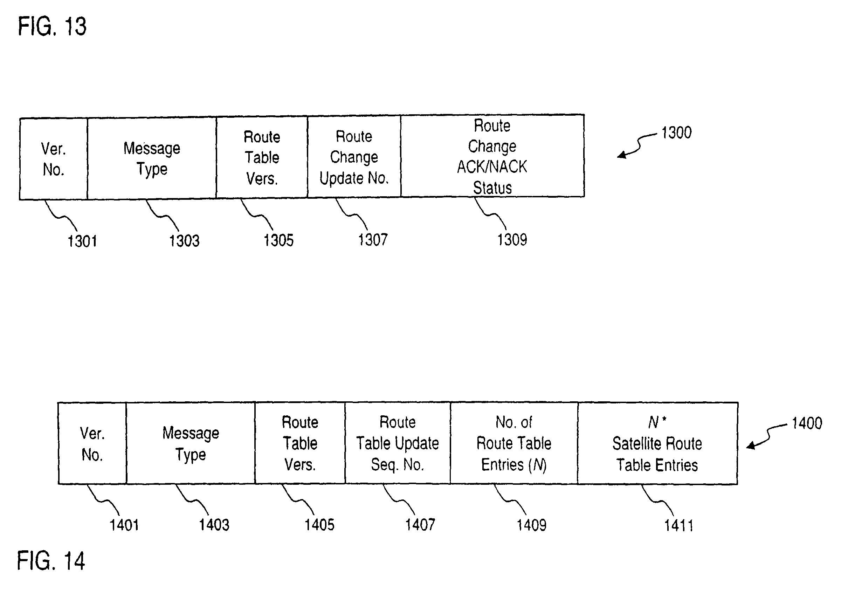

FIG. 13 is a diagram of a format of a Route Change Acknowledgement message used in a Satellite Routing Protocol, according to an embodiment of the present invention. A Route Change Acknowledgement message 1300 includes an ISRP Version Number field 1301, an ISRP Message Type (Route Change Acknowledgement) field 1303, an ISRP Route Table Version field 1305, and an ISRP Route Change Update Number field 1307, and an ISRP Route Change ACK/NACK Status with reason code field 1309. The route server 215 acknowledges correct reception of the ISRP Route Change Update message, which includes verification of the Route Table version.

FIG. 14 is a diagram of a format of a Route Table Update message, according to an embodiment of the present invention. A Route Table Update message 1400, according to the Satellite Routing Protocol, includes the following fields: an ISRP Version Number field 1401, an ISRP Message Type (Route Table Update) field 1403, an ISRP Route Table Version field 1405, an ISRP Route Table Update Sequence Number (with first/last indication) field 1407, a Number of Route Table Entries (N) field 1409, and a field 1411 for containing *N* * Satellite Route Table Entries. The format of a route table entry is the same as that shown for the Route Table Broadcast message 1100 in FIG. 11B.

The Route Table Update message 1400 is sent by the route server 215 of an access gateway to a set of STs as identified by an MGID. This is a means of sending only the changes of the current route table (in a given interval of time) as shared by this set of STs. The behavior of the remote ST, which receives the ISRP Route Table Update message, is described in the ISRP/ST section below. The behavior of the route server 215, which sends the ISRP Route Table Update message, is described below.

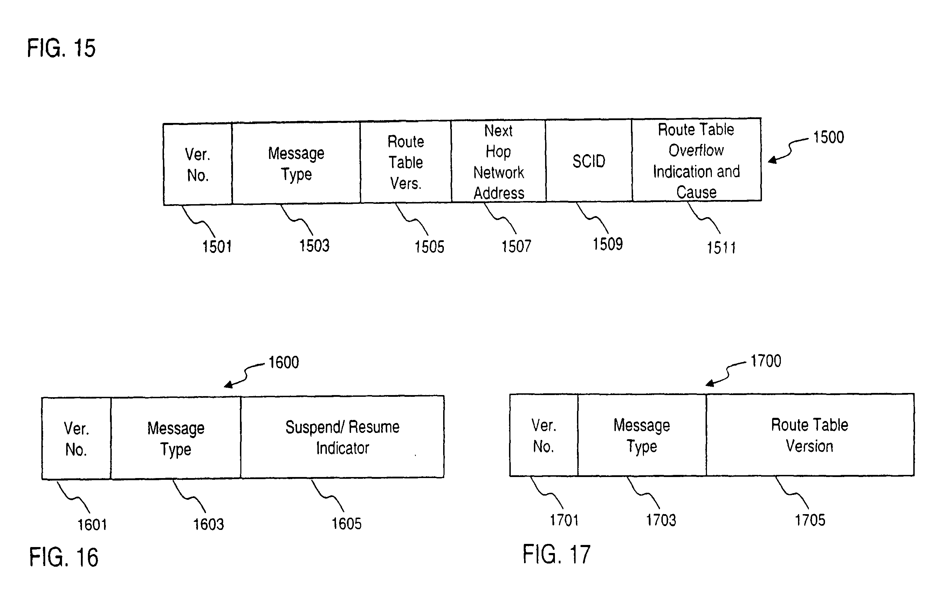

FIG. 15 is a diagram of a format of a Heartbeat message used in a Satellite Routing Protocol, according to an embodiment of the present invention. A ST sends a Heartbeat message 1500 at configurable intervals to notify the route server 215 of the route table version number of the ISRP route table. The Heartbeat message 1500, in an exemplary embodiment, includes an ISRP Version Number field 1501, an ISRP Message Type field 1503 (Heartbeat), an ISRP Route Table Version field 1505, a Next Hop Network Address field 1507 (e.g., IPv4 or IPv6), a Satellite Context ID (SCID) field 1509, and a Route Table Overflow Indication and Overflow Cause field 1511.

STs maintain route tables, which include default and static routes that are configured, as well as routes learned by way of dynamic routing protocols. These mechanisms may cause the route table to overflow; accordingly an overflow indicator (i.e., Overflow Indication and Overflow Cause field 1511) is provided. Overflows can be caused, for example, by the terrestrial routing protocol (RIP or OSPF), ISRP or Satellite Redirect adding route entries beyond the total size allowable by the ST port. The Overflow Indication and Overflow Cause field 1511 specifies one of these causes.

FIG. 16 is a diagram of a format of a Suspend message used in a Satellite Routing Protocol, according to an embodiment of the present invention. The route server 215 sends a Suspend message 1600 to the remote STs; and the remote STs are not to send any ISRP messages to the route server 215. The Suspend message 1600 includes an ISRP Version Number field 1601, an ISRP Message Type field 1603 (Suspend), and a Suspend/Resume Indicator field 1605. The route server 215 would follow the Suspend message 1600 with an ISRP Rejoin message, as shown below in FIG. 17.

FIG. 17 is a diagram of a format of a Rejoin message used in a Satellite Routing Protocol, according to an embodiment of the present invention. The route server 215 sends a Rejoin message 1700 as an empty Table Broadcast to instruct the receiving STs to clear out routes learned from the satellite link and to send terrestrial routes using the ISRP Route Change Update message. The Rejoin message 1700, in an exemplary embodiment, includes an ISRP Version Number field 1701, an ISRP Message Type field 1703 (Rejoin), and an ISRP Route Table Version field 1705 (e.g., INITIAL_ROUTE_TABLE).

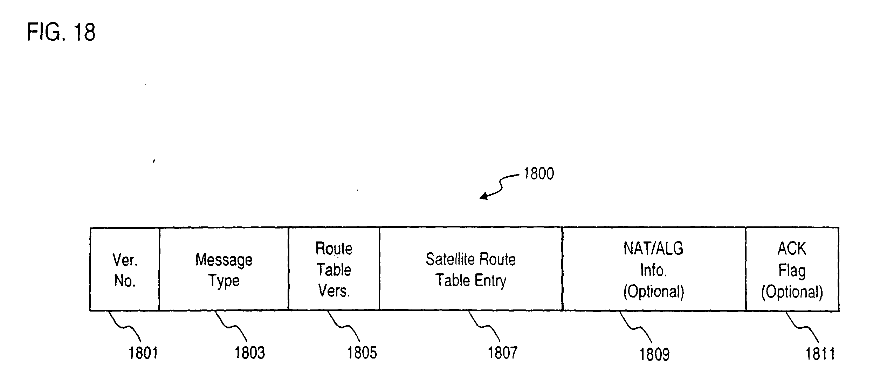

FIG. 18 is a diagram of a format of a Satellite Redirect message used in a Satellite Routing Protocol, according to an embodiment of the present invention. ISRP Satellite Redirect is a mechanism of unicasting routing information from the access gateway and route server 215 to the customer's ST. The access gateway and route server 215 know the allowable routes that are available via the satellite network. The access gateway and route server 215 learn these routes by way of static configuration and ISRP Change Update messages.

A customer may configure the remote STs default route to specify the access gateway as the next hop. When a ST receives an IP packet for which the ST does not have an explicit Route Table entry, the ST forwards the packet to the access gateway. If the access gateway does not have a route entry, then the gateway sends an ICMP Host Unreachable message back towards the source of the IP packet. However, if the access gateway finds a route entry, then the gateway forwards the packet. If the next hop IP address is associated with the satellite interface, then the access gateway knows that the source ST could send follow-on packets directly to the destination ST. The access gateway determines the IP address of the source ST by performing another route table lookup on the source IP address of the IP packet.

The access gateway sends an ISRP Satellite Redirect message 1800 to the source ST. The Satellite Redirect message 1800 includes an ISRP Version Number field 1801, an ISRP Message Type field 1803 (Satellite Redirect), an ISRP Route Table Version field 1805, and a Satellite Route Table entry field 1807. The remote ST inserts the Satellite Route Table entry 1807 into its route table and sets the timer for the entry. All subsequent packets to the same destination IP address are sent over the satellite via a single hop. It is noted that the format of Satellite Redirect message 1800 may alternatively provide an optional field 1809 for NAT/ALG information. If the IP packet requires an ALG operation, then the access gateway may drop the packet.

As discussed previously, the Redirect message 1800 may require an optional acknowledgement. For example, a Boolean flag ("ACK flag") 1811 can be utilized in the Redirect message 1800 to indicate whether the message 1800 requires an acknowledgement from the receiver. On receiving the Redirect message 1800 with the ACK flag set, the receiver will respond with an ISRP Satellite Redirect Acknowledgement message (not shown). The acknowledgement indicates to the receiving redirect client that the Redirect message 1800 was received and processed by the intended receiver. Generally Forward Satellite Redirect messages should be sent unacknowledged, i.e., with the ACK flag not set. This is because loss of a Forward Satellite Redirect is not a particularly pernicious event. The Forward Satellite Redirect can and will be generated again at the receipt of a subsequent "misrouted" packet. In contrast, Reverse Redirect messages (both sent within or across address domains) are sent acknowledged with the ACK flag set.

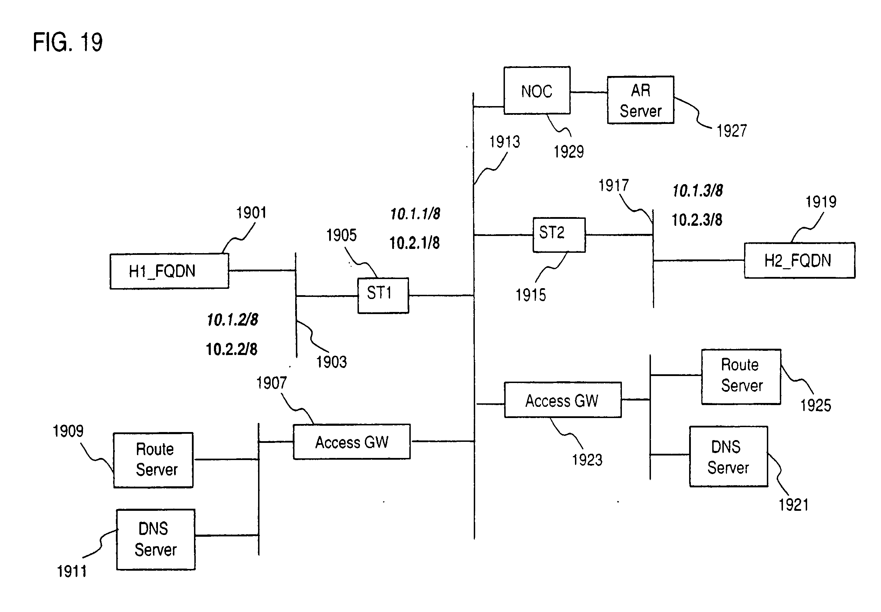

FIG. 19 is a diagram of an addressing approach for supporting communication between two private addressing domains, according to an embodiment of the present invention. In this example, a host 1901 has connectivity to a data network 1903, to which a satellite terminal (ST) 1905, an access gateway 1907, a route server 1909, and a DNS server 1911 are attached. In an exemplary embodiment, the network 1903 is a local area network (LAN). The network 1913 constitutes a private addressing domain and includes the ST 1905 for access to a wide area network (WAN) 1913, which in this example is a satellite network. Alternatively, the network 1903 may itself be a WAN (instead of a LAN), whereby the DNS server 1911 is connected to the network 1903 via an ST (not shown); this configuration permits an enterprise to locate the DNS server 1911 anywhere in its network.

As mentioned previously, every host in a network needs a mechanism to convert host names (i.e., symbolic addresses) to host addresses (i.e., numeric addresses) and vice-versa. DNS provides such a mechanism. The Internet DNS provides this capability by creating a distributed database that is used primarily for the translation between host names and IP addresses. This distributed database allows local control of the segments of the database, while making the overall database available across the entire network through a client-server scheme. Programs, known as "name servers" constitute the server half of the DNS client-server mechanism, while the client-side is referred to as "resolvers."

One implementation of DNS is the Berkeley Internet Name Domain (BIND). In BIND, the resolver is just a set of library routines that are linked into programs (such as the File Transfer Protocol (ftp)). The resolver has the capability to generate a query, send the query, and wait for an answer to the query; further, if necessary, the resolver may resend the query if no response is received. In general, the burden of finding an answer to the query lies largely with the DNS server 1911, 1921.

A second private addressing domain is supported by another ST 1915. The ST 1915 is coupled to a network 1917 that includes a host 1919, a DNS server 1921, an access gateway 1923, and a route server 1925. Each of the STs 1905, 1915, according to an exemplary embodiment, maintains an Address Resolution (AR) cache on its satellite interface for resolving the next-hop network address (IPv4 or IPv6) and Satellite Context ID (SCID) to the Satellite Destination (link layer) Address. Accordingly, the STs 1905, 1915 support ARP (Address Resolution Protocol), as detailed in IETF RFC 826, for resolving IPv4 addresses and ND (Neighbor Discovery), as detailed in IETF RFC 2461, for resolving IPv6 addresses. The NOC 1929 is configured to deny Satellite ARP Requests to hosts which are resolving to IP addresses of STs which have been suspended.

The STs 1905, 1915 maintain AR caches 144 on their terrestrial interfaces for resolving the next-hop network address (IPv4 or IPv6) to, for example, an Ethernet MAC (Medium Access Control) Address. The ST 1905, 1915 supports the use of configured (static) AR entries for its satellite interface. Upon receiving RIP and OSPF messages at the LAN interface, the ST 1905, 1915 translates these routing protocols into the Internal Satellite Routing Protocol (ISRP). Correspondingly, upon receiving ISRP messages at its satellite interface, the ST 1905, 1915 translates this protocol into RIP and OSPF messages. If the ST 1905, 1915 is suspended and is configured to use a local routing protocol (i.e., RIP or OSPF), the ST 1905, 1915 reports that the subnets that were previously reachable over the satellite air interface are no longer reachable. Also, if a previously suspended ST 1905, 1915 is placed into a state where it is no longer suspended and is configured to use a local routing protocol (i.e., RIP or OSPF), the ST 1905, 1915 then report the subnets that are currently reachable over the satellite air interface. The ST 1905, 1915, if running dynamic routing protocols (RIP or OSPF) on its terrestrial ports, would update its route table and broadcast these changes appropriately on its terrestrial interface when its satellite interface is not operational.

For the purposes of explanation, the hosts 1901, 1919 are assumed to be owned by two different customers, C1 and C2. It is also assumed that each of the hosts 1901, 1919 (i.e., H1 and H2) is associated with a Fully Qualified Domain Name (FQDN); e.g., the host 1901 has the name "H1_FQDN" and the host 1919 has the name "H2_FQDN." The FQDN is pre-configured separately in each customer's DNS Server 1911, 1921, along with the appropriate private IP address associated with the customer's subnet structure.

As previously discussed, a route server 1909, 1925 provides a central mechanism to collect all route changes and coordinates the distribution of these changes to the participating routers. The route server 1909 is more fully described below. It is recognized that the route server 1925 possesses similar functionalities.

As explained with respect to FIG. 4, the route server 1909 initializes by deleting all dynamic routes and sending an ISRP Rejoin message to all remote STs (in this example, ST 1905) configured as part of the route server 1909. This causes the ST 1905 to send ISRP Route Change Update messages representing the network connectivity the ST 1905 has at its terrestrial interface. When the route server 1909 receives ISRP Route Change Update messages, the route server 1909 rebuilds the route table for the access gateway 1907. The route server 1909 waits a configurable period of time or until it has received an update from each ST 1905 (whichever is less) before distributing the first ISRP Route Table Broadcast message.

As the route server 1909 is receiving ISRP Route Change Update messages, the route server 1909 verifies the elements of the message. Particularly, the route server 1909 checks the Route Table Version in the message prior to processing the route change update entries. For each entry, the route server 1909 evaluates the change in the cost metric of the specified network address. If the network address of the addressing domain does not exist in the route table, then the entry is added (unless, for example, the cost indicated is "infinity"). By way of example, this "infinity" cost is represented in the manner employed by RIP (a value of 20). If the network address exists in the route table and the cost metric is less than an existing route to the same network address and network mask, then the route server 1909 replaces the existing route with the new route. If the network address exists in the route table with the same next hop IP address, but the cost indicated is infinity, then the existing route is indicated as infinity and a timer is started to timeout the route.

The mechanism of "timing out" routes that reach infinity has two parts. Within the ISRP protocol, the cost metric value of infinity is assigned. If the cost metric of a route reaches infinity (for example, by way of a lost link or otherwise), the route entry is updated with the infinity cost metric and a timer is set. If the timer expires, the route entry is removed from the route table. Another route may be discovered to provide connectivity to the subnet originally specified as the destination network in the route or connectivity will be re-established prior to the timer expiring.

As the route server 1909 receives the ISRP Route Change Update message from the ST 1905, the route server 1909 sends out an ISRP Route Change Acknowledgement message after it has validated the incoming message. The route server 1909 unicasts this acknowledgement to the ST 1905.

Under certain circumstances, such as startup or switchover of the access gateway 1907, the amount of ISRP Route Change Update messages may be "high." In such instances, an ISRP Route Table Broadcast message is sent to convey the changes in terrestrial connectivity (or cost metrics). A configurable threshold could be set at the route server 1909 associated with the rate in which route changes occur. If the threshold is exceeded, then the route server 1909 uses the ISRP Route Table Broadcast message. Each time the route server 1909 uses this message, the version number of the route table is incremented.

In "steady-state" conditions, when the route change threshold is not exceeded, the route server 1909 sends ISRP Route table Update messages at configurable intervals. If the route server 1909 does not have any route changes in the interval, then no messages are sent. The purpose of the ISRP Route table Update message is to only send the changes in the route table and conserve bandwidth. The route server 1909 specifies the version number of the route table.

The ISRP Heartbeat message is used to verify satellite link connectivity of the STs 1905, 1915. When the route server 1909 receives the ISRP Heartbeat message from the ST 1905, the route server I909 can check the route table version to verify that the ST 1905 is using the correct routing information. The route server 1909 is configured with a timer, whereby the route server 1909 should have received either an ISRP Heartbeat message or an ISRP Route Change Update message from the ST 1905. If the route server 1909 receives either of these messages within the configured time interval, then the timer is reset. Otherwise, the route server 1909 assumes there is no longer satellite link connectivity with that ST 1905. The route server 1909 identifies all route entries that have this ST 1905 listed as the "next hop" and sets their cost metric to infinity. These route entries are conveyed to the other STs (e.g., ST 1915) using the various mechanisms discussed earlier. The route server 1909 uses the infinity timeout mechanism to remove the route entry.

If the ST 1905 sends a Heartbeat message with the wrong route table version, then the ISRP Route Table Broadcast message is sent. The route server 1909 is configured with a threshold (indicating the number of Heartbeat messages that have been received with the wrong route table version in some period of time) to determine if the ISRP Route Table Broadcast message is sent using unicast or multicast. The threshold would determine the most efficient method of updating the STs with the correct route table.

If the ST 1905 sends a Heartbeat message with the route table version set to INITIAL_ROUTE_TABLE, then the route server 1909 identifies all route entries that list this ST 1905 as the Next Hop IP Address and sets the cost of those entries to infinity; such is the case, for example, when an ST reboots between ISRP Heartbeat intervals.

Three elements in the behavior of the STs 1905, 1915 as it relates to the ISRP are considered. These elements concern how an ST behaves as it sends and receives ISRP messages over IP, how the ST translates between RIP and ISRP messaging, and how the ST translates between OSPF and ISRP messages. The ST 1915 receives routing information learned terrestrially by way of RIPv1, RIPv2, or OSPFv2 and learned via the satellite link from ISRP. The STs 1905, 1915 are configured with the IP address of their respective ISRP route servers 1909, 1925 and with the Satellite Context IDs that they will use to report routing information through ISRP.

The ST 1905 initializes its route table by removing all entries across the satellite link and sends an ISRP Route Change Update message with the route table version set to INITIAL_ROUTE_TABLE. The ISRP Route Change Update message is populated by route entries learned from the ST's terrestrial routing protocol (RIP or OSPF). Reception of this type of Change Update message signals to the route server 1909 that this ST 1905 needs to receive an ISRP Route Table Broadcast message. The ST 1905, upon sending this Change Update message, resets its ISRP Heartbeat message timer. Each time the ST 1905 sends either an ISRP Route Change Update message or an ISRP Heartbeat message, the ST 1905 resets the Heartbeat message timer.

Whenever the ST's terrestrial routing protocol provides a route change, (e.g., a new route or a change to the cost metric of an existing route), the ST 1905 sends an ISRP Route Change Update message to the route server 1909. The ST 1905 is configured with a Retry Timer, such that if the ST 1905 does not receive an ISRP Route Change Acknowledgement message, then the timer triggers the ST 1905 to re-send the ISRP Route Change Update message. If more changes in the terrestrial routes occur during the retry interval, the ST 1905 includes these changes in the resent ISRP Route Change Update message.

If the ST 1905 receives an ISRP Route Table Broadcast message, the ST 1905 identifies all route entries in the message whose next hop is reached by way of the satellite link and adds a configured value (SATELLITE_COST) to the cost metric of the route. The ST 1905 then imports all the route entries in the ISRP Route Table Broadcast message into the terrestrial protocol (RIP or OSPF) so that the protocol can make a local determination of best path.

The rules for determining the best path are as follows. If the ISRP Route Table Broadcast message has a route entry for which there is no corresponding match (a new subnet address and subnet mask) in the route table as maintained by the terrestrial protocol, then the route entry is added. If the ISRP Route Table Broadcast message has a route entry whose next hop is across the satellite link, and there is a corresponding entry in the route table with matching subnet address, subnet mask, Satellite Context ID, and next hop IP address, then the existing entry is replaced. However, if the Satellite Context ID and/or next hop IP address is different, then the existing entry is replaced if cost metric of the new route entry is lower.

Prior to the ST's terrestrial routing protocol advertising the routes that will be reached by way of the ST 1905, the ST 1905 aggregates these routes into the fewest number of entries as possible. In the same manner, when an ST 1905 receives an ISRP Route table Update message, the ST 1905 is to identify all route entries in the message whose next hop is reached by way of the satellite link and add a configured value (SATELLITE_COST) to the cost metric of the route. The ST 1905 is to provide the same treatment described above for importing these new route entries into the route table and determining best path.

After sending the ISRP Heartbeat message, the ST 1905 resets the ISRP Heartbeat message timer. The configured interval for sending ISRP Heartbeat messages is described as follows. The ST 1905 selects a random number between Y-X and Y+X for sending ISRP Heartbeat messages, wherein the average interval is Y and the window is X. This reduces the probability of overload at the route server 1909 due to a synchronization phenomenon often found in traditional networks. This synchronization phenomenon is described in "Routing in the Internet" by Christian Huitema (2^{nd} edition).

The ISRP Heartbeat message also has an indication of a route table overflow condition at the ST as well as the cause of the overflow. The STs 1905, 1915 are sized for the route tables, which include default and static routes that are configured, as well as routes learned by way of dynamic routing protocols. These different routing mechanisms may cause sized route tables to overflow; so an overflow indicator is provided. Overflows can be caused by the terrestrial routing protocol (RIP or OSPF), ISRP, or Satellite Redirect adding route entries beyond the total size allowable by the ST.

When the ST 1905 receives an ISRP Rejoin message, the ST 1905 employs a similar mechanism as it uses for the ISRP Heartbeat message. After clearing the route table and determining the terrestrial routes to which it provides reachability, the ST 1905 sends an ISRP Change Update message. The ST 1905 is configured with a parameter Z (an integer), which is used to determine when to send the initial ISRP Change Update message. The ST 1905 selects a random number between 0 and Z to serve as a delay timer for sending the initial ISRP Change Update message. This mechanism minimizes network congestion at the route server 1909.

When so configured, the ST 1905 supports and terminates either RIPv1 or RIPv2 (for IPv4) and RIPng (for IPv6) at its terrestrial interface. The first case to consider is the translation of route changes from RIP to ISRP. The ST 1905 receives either periodic or triggered RIP Response messages. RIPv1 Response messages contain an IPv4 address and a metric. The RIPv2 Response messages contain an IPv4 address, a subnet mask, the IP address of the next hop router, and a metric. The ST 1905 is configured with a subnet mask for its terrestrial interface. For RIPv1, the ST 1905 compares the route and configured subnet mask of the terrestrial interface to determine the network ID.

The processing of RIP Response messages entails the ST 1905 generating ISRP Route Change Update messages. Specifically, if the route entry (from a received RIP Response message) is not present in the ST's route table, the route entry is added. Similarly, the route entry is inserted if the route entry is present but the cost metric of the route entry in the RIP Response message and is not infinity. This addition initializes the metric to the received value and updates the next hop router as the sender of the message, before a timer for that entry is started.

If the entry is present with a larger metric, the metric and next router fields are updated. In addition, the timer for the particular entry is restarted. If the entry is present and the next router is the sender of the response message, the metric is updated if the entry differs from the stored value, and the timer is restarted. If the timer of the entry expires prior to being refreshed, the metric is set to infinity and the entry begins timing out.

The ST 1905 is configured with a timer interval to accumulate the number of route entries that are learned from RIP and placed into the ISRP Route Change Update message. When the ST 1905 populates the ISRP Route Change Update message with route entries learned from RIP, the ST 1905 inserts its IP address that is associated with the satellite interface for the next hop routing field.

The second case to consider is the translation of route changes from ISRP to RIP. If the ST 1905 is configured to provide periodic RIP Response messages, then the ST 1905 creates RIP Response messages for every route entry in its route table. If the ST 1905 is configured to provide triggered RIP Response messages, then the ST 1905 generates Response messages when it receives either an ISRP Route Table Broadcast message or an ISRP Route table Update message which cause route entries to be imported or updated. When the ST 1905 advertises the routes learned from ISRP using RIP, the ST 1905 substitutes the ST's terrestrial interface IP address for the next hop routing field.

The translation between OSPF and ISRP message is supported by the ST 1905. The ST 1905 is configured with OSPF such that the ST 1905 sends and receives Link State Advertisements (LSA) as the ST 1905 participates in the various OSPF protocols. OSPF is composed of several protocols whereby several packet formats are specified: Hello, Database Description, Link State Request, Link State Update, Link State Acknowledgement, Link State Advertisement, Router Links Advertisement, Network Link Advertisement, Summary Link Advertisement, and Autonomous System (AS) External Link Advertisement.

The ST 1905, using, for example, these LSAs and Dijkstra's algorithm, determines route table entries with associated cost metrics. Whenever the OSPF route table changes, the ST 1905 triggers ISRP Route Change Update messages. When the ST 1905 supporting the various OSPF protocols sends LSAs onto its terrestrial interface, the ST 1905 generate these LSAs from the ISRP route table.

According to one embodiment of the present invention, four different types of LSAs are supported: Router Link Advertisements, Network Link Advertisements, Summary Link Advertisements, and Autonomous System Link Advertisements. The types of LSAs that the ST generates depend on the OSPF hierarchical configuration of the ST. IP routers that support OSPF may be configured to support various levels of routing hierarchy as listed below: OSPF level 1 area routers, OSPF area border routers, and OSPF autonomous system (AS) border routers.

The term "area" in OSPF specifies a set of routers that freely exchange LSAs with no constraints. The OSPF defines a "backbone area" as a set of routers whereby packets travel through it when going from one area to another. Within an autonomous system (AS), area border routers report costs to networks within the autonomous system as well as the "cost to" AS border routers. AS border routers report cost from themselves to the networks outside the autonomous system. OSPF supports the notion of a "stub area." For stub areas connected to an AS border router, link state information generated by the AS border router is not flooded into the area. This is a mechanism for conserving memory and bandwidth at the expense of less optimal routes.

As mentioned, the satellite system supports the ability of the end hosts and STs to be part of subnets with private addressing. For instance, the IETF has set aside the following address ranges for use in private networks: 10.0.0.0/24, 172.16.0.0/20, and 192.168.0.0/16; details of these address ranges are provided in RFCs 1597 and 1918 - both of which are incorporated herein by reference in their entireties.

In support of the above functionality, an appropriate signaling mechanism is performed within the network elements to allow communication to proceed in a single satellite hop. The mechanism involves network management procedures among the network service provide and customers - this may be in form of a partnership, for example. In addition to the network management preconditions, a network signaling protocol is utilized to distribute the necessary state information to the STs. It is noted that this mechanism is executed for customers that use private addressing for their STs or their host subnets.

The process for establishing the network management preconditions is now described. In this example, C1 and C2 want to form a communication partnership with each other. C1 chooses an IP address within its own address space that will be associated with the domain name H2_FQDN; for explanatory purposes, this IP address is 10.1.3.1. An entry is configured into C1's DNS server 1911: H2_FQDN ←→ 10.1.3.1.

Next, C2 assigns a set of IP addresses within its own address space, one of which is associated with C1's address 10.1.3.1. It is assumed this IP address is 10.2.3.1. C2 uses this address to perform a network address translation to/from 10.1.3.1. C2's DNS Server 1921 is configured as follows: H2_FQDN ←→ 10.2.3.1. A NAT entry in C2's access gateway 1923 is as follows: 10.1.3.1 ←→ 10.2.3.1. This NAT entry is distributed by the access gateway 1907 of C1.

C1's access gateway 1907 has the following the route entry: 10.1.3/8 → 10.1.1.2 (private IP address of ST 1905 in C1's context). An Address Resolution (AR) Server 1927 at the NOC 1929 is configured with 10.1.1.2 → ST1 SAT MAC (AR cache entry) for the appropriate community of interest (COI) associated with C1.

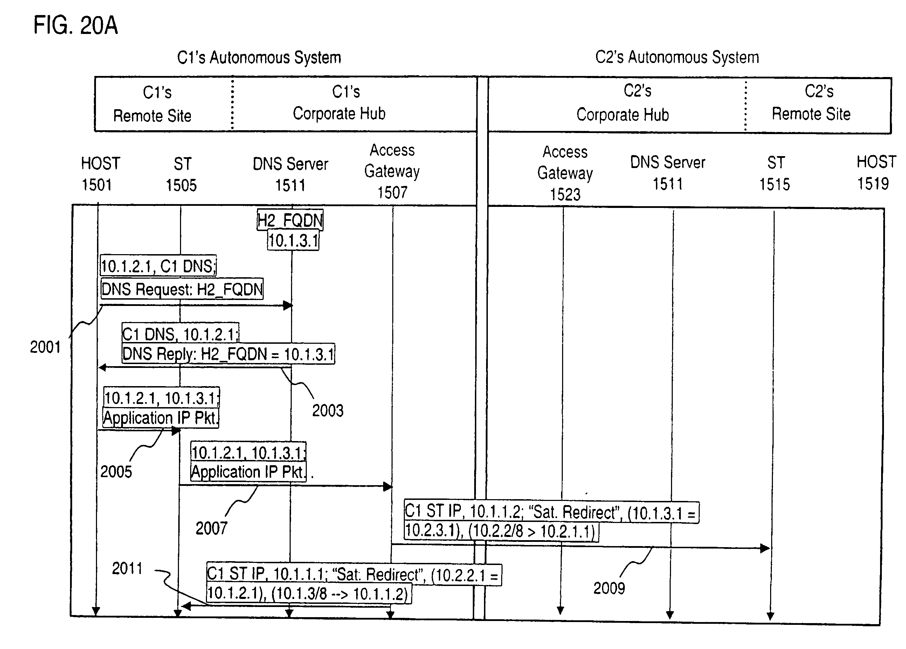

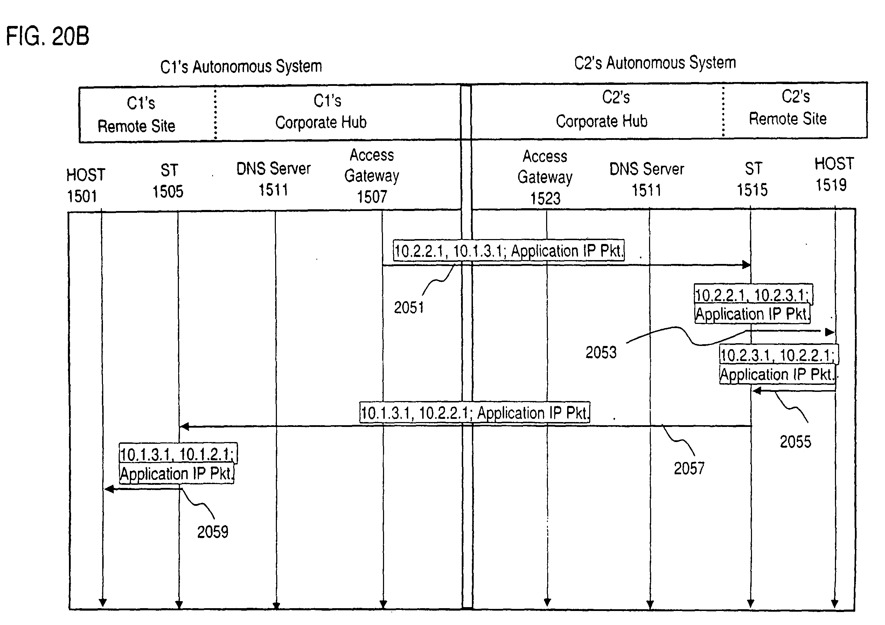

C2 assigns a set of IP addresses from its own address space to use to map to IP addresses from hosts in C1. In this example, H1_FQDN has an IP address of 10.1.2.1; and C2 uses IP address 10.2.2.1 to NAT to/from 10.1.2.1. This set of C2 IP addresses is configured into C1's access gateway 1907 and distributed to ST 1905. C2 also is configured with a route entry of: 10.2.2/8 → 10.2.1.1 (private IP address of ST 1905 in C2's context). Thus, the AR Server 1927 is configured with 10.2.1.1 → ST1 SAT MAC (AR cache entry) for the appropriate COI associated with C2. At this point, the system of FIG. 19 is capable of establishing communication between the different private addressing domains of network 1903 and network 1917, as described below in FIGs. 20A and 20B.

FIGs. 20A and 20B are diagrams of processes associated with establishing communication between the two private addressing domains of the system of FIG. 19. In particular, the diagrams illustrate the network signaling to allow for follow-on communication to occur one-hop over the satellite network between C1's host 1901 and C2's host 1919. In this example, an application running on host 1901 (i.e., H1_FQDN) accepts a URL from the user and submits a DNS Request, as in step 2001, for H2_FQDN (i.e., host 1919). The source IP address is 10.1.2.1, which is within the addressing domain of C1. The destination IP address is that of C1's DNS server 1911. The packet may pass through ST 1905 and another ST (not shown), assuming this other ST is serving the subnet DNS server 1911. The DNS server 1911 is preconfigured with the IP address for its own domain for H2_FQDN. Accordingly, this IP address (10.1.3.1) is returned back to H1_FQDN in a DNS Reply message, per step 2003.

Next, the application on the host 1901 sends an application packet (which is converted into one or more IP packets) with a destination IP address of 10.1.3.1 (i.e., host 1919). The host 1901 sends this packet to ST 1905 (because the ST 1905 serves as the default router for the host 1901), per step 2005. The ST 1905 examines its route table for an entry that matches the destination address of 10.1.3.1 (i.e., host 1919). Because no entry is found, the ST 1905 selects the default route entry which has the next hop IP address of C1's access gateway 1907. The application IP packet is sent, as in step 2007, to the access gateway 1907. The diagram shows IP source and destination addresses in C1's network addressing domain, 10.1.2.1 (i.e., host 1901) and 10.1.3.1 (i.e., host 1919), respectively, along with the IP payload that contains the application data.

C1's access gateway 1907 performs a route table lookup on the destination IP address 10.1.3.1 (i.e., host 1919) and detects that there are "special" additional elements associated with this entry. The access gateway 1907 is configured with a "NAT entry" that gives an equivalent address to 10.1.3.1 (i.e., host 1919) in C2's address space, namely 10.2.3.1 (i.e., host 1919). Additionally, the Gateway 1907 has a Route Table entry for 10.2.2/8, specifying 10.2.1.1 (i.e., ST 1905). C1's access gateway 1907 sends, as in step 2009, a special ISRP Satellite Redirect message with this information to the next hop ST associated with the route entry for 10.1.3.1 (i.e., host 1919), which is 10.1.1.2 (i.e., ST 1915).

Additionally, C1's access gateway 1907 detects that ST 1905 has sent the IP application packet to the hub ST instead of to ST 1915 and determines that a "direct" route entry along with a NAT entry is needed. The access gateway 1907 is able to determine that the communication is between H 1 and H2, such that ST 1905 needs a NAT entry for 10.1.2.1 from C2's address space, namely 10.2.2.1. Additionally, the access gateway 1907 has a Route Table entry for 10.1.3/8, specifying 10.1.1.2 (i.e., ST 1915). In step 2011, the access gateway 1907 sends a special ISRP Satellite Redirect message to the ST 1905 that contains this NAT entry along with the Route Table entry for reaching the host 1919 (i.e., H2_FQDN).

As seen in FIG. 20B, C1's access gateway 1907 sends the application IP packet onto the next hop ST, namely ST 1915, and changes the source IP address of the host 1901 from 10.1.2.1 to 10.2.2.1 so as to be part of C2's addressing domain, per step 2051. The ST 1915 performs a NAT function on the destination IP address, converting the C1 addressing domain to that of C2. The ST 1915 then forwards, as in step 2053, the IP packet to the host 1919 (i.e., H2_FQDN). In step 2055, the application of the host 1919 responds by sending another application packet (which becomes an IP packet with the destination IP address of 10.2.2.1 (i.e., host 1901)) destined for the host 1901 (i.e., H1_FQDN) to the ST 1915. In turn, the ST 1915 performs a NAT function on the source IP address so as to be part of C1's addressing domain and forwards the packet to the ST 1905, per step 2057. Next, the ST 1905 performs a NAT function on the destination IP address to convert to C1's addressing domain, accordingly and forwards the IP packet to host 1901, per step 2059.

At this point, ST 1905 and ST 1915 are properly configured with the necessary NAT entries, route table entries, and AR cache entries to allow direct communication between the host 1901 and the host 1919 with one satellite hop and, therefore, have established mesh connectivity for overlapping private addressing domains.

In the system of FIG. 19, a number of error conditions may arise; for example, a packet may get lost during the signaling setup of FIGs. 20A and 20B. During steps 2001 and 2003, if either the DNS Request or the Reply is lost, the application of the host 1901 will timeout and retry. If the Application IP packet is lost during steps 2005 and 2007, then the application's mechanisms control how the loss is handled. For example, if the application is TCP, then TCP will timeout and resend. If the application is UDP, then another packet from the same flow (same source and destination IP address) will follow. During step 2009, if the access gateway 1907 does not have a route entry for the destination address, then the access gateway 1907 should send a "Destination Unreachable" ICMP packet back toward the source IP address. If the ISRP Satellite Redirect packet is dropped before the packet gets the ST 1915, then at steps 2013 and 2015 when ST 1915 receives the application IP packet, the ST 1915 will forward the packet to C2's access gateway 1923 because of its default route.

It is instructive to discuss Applications Layer Gateway functions. Applications that imbed network layer addresses are affected by NAT -- unless the NAT device supports corresponding ALGs. Exemplary ALGs are detailed in IETF RFC 3027, which is incorporated herein by reference in its entirety. ALGs that are required by NAT include the following: File Transfer Protocol (FTP), Resource Reservation Protocol (RSVP), Domain Name Service (DNS), Simple Mail Transfer Protocol (SMTP), Session Initiation Protocol (SIP), RealAudio, ITU H.323, and Simple Network Management Protocol (SNMP). The STs 1905, 1915 performing NAT on the satellite interface also support ALGs for any of the above protocols that have signaling traffic that traverses the satellite network.

In this scenario, an ALG may be run at the access gateway 1907, 1923 on the first IP packet of the extranet signaling session. The access gateway 1907, 1923 passes state information of the ALG to the ST 1905, 1915 that initiated communications, such that the access gateway 1907, 1923 may resume the ALG for the subsequent IP packets that follow. This state information, in an exemplary embodiment, is passed in a Satellite Redirect Message along with the routing and NAT information.

It is also possible for the access gateway 1907, 1923 to drop the IP packet if an ALG is required, thereby removing the complexity of having to pass state information of the ALG from the access gateway 1907, 1923 to the ST 1905, 1915.

As evident from the above discussion, the customers, C1 and C2, may assign private subnet addresses for their terrestrial links, in which the subnet addresses are non-overlapping. Each customer, thus, maintains the appropriate DNS entry for each host 1901, 1919 in the respective DNS server 1911, 1921; the DNS entry is a private entry for that customer alone. The access gateway 1907, 1923 is configured with the NAT information; accordingly, the assignment of IP addresses to corresponding hosts 1901, 1919 is static.

With respect to implementation, the system of FIG. 19 may encounter the issues: Reporting of Route table Overflow Condition, Handling of IPv4 TTL and IPv6 Hop Limit Fields, and ST (UP) Route Table Structure. In particular, the manner in which route entries can be assigned to the terrestrial interface and the satellite link impacts management of the route table. A consideration is the fact that the route entries are maintained by numerous different routing mechanisms (e.g., static routes, default routes, ISRP, RIP, OSPF, and Satellite Redirect).

ISRP specifies a mechanism in which the ST 1905, 1915 can report to the route server 1909, 1925 conditions in which the remote's route table overflows and the cause of the overflow. The ST 1905, 1915 monitors the overall size of its route tables continually and reports overflow conditions. The ST 1905, 1915 maintains statistics regarding overflow indications that are received by way of ISRP and forwards these statistics to the NOC 1929.

As regards the handling of IPv4 TTL and IPv6 Hop Limit Fields, when a router receives an IP packet at one of its ports, the router decrements either the TTL or Hop Limit field and determines whether the IP packet has reached its packet "lifespan." The originating host initializes the TTL or Hop Limit field. When the field reaches zero, the IP packet is dropped. Whenever a router discards a datagram because its hop count has reached zero, the router sends an ICMP time exceeded message back to the IP source address. In the system of FIG. 19, the STs 1905, 1915 are configured with router functionalities.

When the ST 1905, 1915 receives an IP packet at its terrestrial interface, the ST 1905, 1915 will either successfully resolve the destination IP address of the packet or will discard the packet. If the ST 1905, 1915 finds a route entry which identifies that the next hop IP address is associated with its Ethernet port, then the ST 1905, 1915 subtracts a value of one from the TTL or Hop Limit field and, if zero, discards the IP packet. If the ST 1905, 1915 finds a route entry which identifies that the next hop ST is reached via the satellite link, then the ST 1905, 1915 subtracts (1 + satellite weight) from the TTL or Hop Limit field. The satellite weight is a configurable parameter that may be obtained from the NOC 1929. If the value of the TTL or Hop Limit field becomes zero or negative, then the ST 1905, 1915 discards the IP packet. When the ST 1905, 1915 discards the IP packet because of the Hop Limit or TTL field is zero or negative, the ST 1905, 1915 sends an ICMP time exceeded message back to the IP source address, according to IETF RFC 2463 and IETF RFC 1256 (both of which are incorporated herein by reference in their entireties). The above approach thus considers at the uplink side whether or not the packet would be discarded on the downlink side, thereby advantageously saving bandwidth.

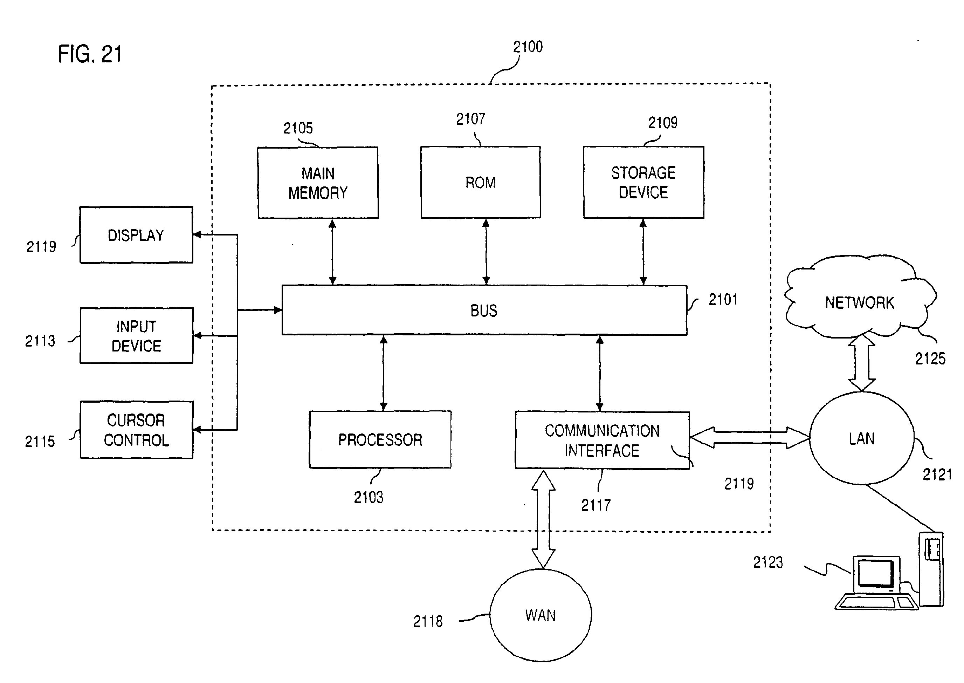

FIG. 21 illustrates a computer system 2100 upon which an embodiment according to the present invention can be implemented. The computer system 2100 includes a bus 2101 or other communication mechanism for communicating information and a processor 2103 coupled to the bus 2101 for processing information. The computer system 2100 also includes main memory 2105, such as a random access memory (RAM) or other dynamic storage device, coupled to the bus 2101 for storing information and instructions to be executed by the processor 2103. Main memory 2105 can also be used for storing temporary variables or other intermediate information during execution of instructions by the processor 2103. The computer system 2100 may further include a read only memory (ROM) 2107 or other static storage device coupled to the bus 2101 for storing static information and instructions for the processor 2103. A storage device 2109, such as a magnetic disk or optical disk, is coupled to the bus 2101 for persistently storing information and instructions.

The computer system 2100 may be coupled via the bus 2101 to a display 2111, such as a cathode ray tube (CRT), liquid crystal display, active matrix display, or plasma display, for displaying information to a computer user. An input device 2113, such as a keyboard including alphanumeric and other keys, is coupled to the bus 2101 for communicating information and command selections to the processor 2103. Another type of user input device is a cursor control 2115, such as a mouse, a trackball, or cursor direction keys, for communicating direction information and command selections to the processor 2103 and for controlling cursor movement on the display 2111.

According to one embodiment of the invention, the various processes shown in FIGs. 3-10 are provided by the computer system 2100 in response to the processor 2103 executing an arrangement of instructions contained in main memory 2105. Such instructions can be read into main memory 2105 from another computer-readable medium, such as the storage device 2109. Execution of the arrangement of instructions contained in main memory 2105 causes the processor 2103 to perform the process steps described herein. One or more processors in a multi-processing arrangement may also be employed to execute the instructions contained in main memory 2105. In alternative embodiments, hard-wired circuitry may be used in place of or in combination with software instructions to implement the embodiment of the present invention. Thus, embodiments of the present invention are not limited to any specific combination of hardware circuitry and software.

The computer system 2100 also includes a communication interface 2117 coupled to bus 2101. The communication interface 2117 provides a two-way data communication coupling to a network link 2119 connected to a local network 2121. For example, the communication interface 2117 may be a digital subscriber line (DSL) card or modem, an integrated services digital network (ISDN) card, a cable modem, a telephone modem, or any other communication interface to provide a data communication connection to a corresponding type of communication line. As another example, communication interface 2117 may be a local area network (LAN) card (e.g. for Ethernet^{™} or an Asynchronous Transfer Model (ATM) network) to provide a data communication connection to a compatible LAN. Wireless links can also be implemented. In any such implementation, communication interface 2117 sends and receives electrical, electromagnetic, or optical signals that carry digital data streams representing various types of information. Further, the communication interface 2117 can include peripheral interface devices, such as a Universal Serial Bus (USB) interface, a PCMCIA (Personal Computer Memory Card International Association) interface, etc. Although a single communication interface 2117 is depicted in FIG. 21, multiple communication interfaces can also be employed. For example, the communication interface 2117 can be a card that communicates with a Wide Area Network (WAN) 2118.

The network link 2119 typically provides data communication through one or more networks to other data devices. For example, the network link 2119 may provide a connection through local network 2121 to a host computer 2123, which has connectivity to a network 2125 (e.g. a wide area network (WAN) or the global packet data communication network now commonly referred to as the "Internet") or to data equipment operated by a service provider. The local network 2121 and network 2125 both use electrical, electromagnetic, or optical signals to convey information and instructions. The signals through the various networks and the signals on network link 2119 and through communication interface 2117, which communicate digital data with computer system 2100, are exemplary forms of carrier waves bearing the information and instructions.

The computer system 2100 can send messages and receive data, including program code, through the network(s), network link 2119, and communication interface 2117. In the Internet example, a server (not shown) might transmit requested code belonging an application program for implementing an embodiment of the present invention through the network 2125, local network 2121 and communication interface 2117. The processor 2103 may execute the transmitted code while being received and/or store the code in storage device 2109, or other non-volatile storage for later execution. In this manner, computer system 2100 may obtain application code in the form of a carrier wave.

The term "computer-readable medium" as used herein refers to any medium that participates in providing instructions to the processor 2105 for execution. Such a medium may take many forms, including but not limited to non-volatile media, volatile media, and transmission media. Non-volatile media include, for example, optical or magnetic disks, such as storage device 2109. Volatile media include dynamic memory, such as main memory 2105. Transmission media include coaxial cables, copper wire and fiber optics, including the wires that comprise bus 2101. Transmission media can also take the form of acoustic, optical, or electromagnetic waves, such as those generated during radio frequency (RF) and infrared (IR) data communications. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, and EPROM, a FLASH-EPROM, any other memory chip or cartridge, a carrier wave, or any other medium from which a computer can read.

Various forms of computer-readable media may be involved in providing instructions to a processor for execution. For example, the instructions for carrying out at least part of the present invention may initially be borne on a magnetic disk of a remote computer. In such a scenario, the remote computer loads the instructions into main memory and sends the instructions over a telephone line using a modem. A modem of a local computer system receives the data on the telephone line and uses an infrared transmitter to convert the data to an infrared signal and transmit the infrared signal to a portable computing device, such as a personal digital assistant (PDA) or a laptop. An infrared detector on the portable computing device receives the information and instructions borne by the infrared signal and places the data on a bus. The bus conveys the data to main memory, from which a processor retrieves and executes the instructions. The instructions received by main memory can optionally be stored on storage device either before or after execution by processor.

Accordingly, the present invention provides a satellite network that supports inter-domain routing of packets. An address server, which supports dynamically assigning a network addresses (e.g., NAT addresses) based on a destination address associated with a particular packet. The packet originates from an address domain (e.g., private address space) that is different from the address domain associated with the destination address (e.g., public address space). Additionally, these NAT addresses are "leased" for a specified duration in which the addresses are considered valid; however, a lease renewal mechanism is provided to extend the duration. A redirect mechanism is also utilized to instruct a source terminal originating the packet of the "correct" next-hop. The above mechanism advantageously provides efficient routing and address translation.

While the present invention has been described in connection with a number of embodiments and implementations, the present invention is not so limited but covers various obvious modifications and equivalent arrangements, which fall within the purview of the appended claims.

## Claims

1. A method for providing inter-domain routing of a packet over a mesh network (207) including a plurality of terminals (205, 209), the method comprising:
receiving a request from a first one of the terminals (205, 209) for a network address to route the packet over the mesh network (207), wherein the packet originates from a first address domain and specifies a destination address associated with a second address domain different from the first address domain;
assigning the network address based on the second address domain; and
transmitting the network address to the first terminal (205, 209), wherein the first terminal (205, 209) routes the packet via a second terminal (205, 209) based upon the network address, the first terminal (205, 209) having been redirected to communicate with the second terminal (205, 209),
**characterised in that** the network address in the assigning step is valid for a configurable duration.

2. A method according to claim 1, further comprising:
starting a timer to track the duration, wherein the expiration of the timer requires renewal of the network address for further use by the first terminal (205, 209).

3. A method according to one of claims 1-2, further comprising:
receiving another request for another network address corresponding to a third address domain different from the first and second address domains.

4. A method according to one of claims 1-3, wherein the assigning step is performed dynamically in response to the request.

5. A method according to one of claims 1-4, wherein the first address domain is private and the second address domain is public.

6. A method according to one of claims 1-5, wherein the first terminal (205, 209) in the receiving step is pre-configured with the network address.

7. A method according to one of claims 1-6, wherein the mesh network (207) includes a route server (215) to collect routing information from the plurality of terminals (205, 209), the routing information specifying reachability of the destination address, each of the terminals (205, 209) maintaining a route table that is updated based on the collected routing information.

8. A terminal for routing of a packet across multiple address domains via a mesh network (207) including a plurality of terminals, the terminal comprising:
an air interface configured to transmit the packet to a first one of the plurality of terminals (205, 209), wherein the packet originates from a first address domain and specifies a destination address associated with a second address domain different from the first address domain, the air interface being adapted to receive a redirect message specifying a second one of the plurality of terminals (205, 209) for routing the packet; and
a processor (213) configured to generate a request to an address server (212) within the mesh network (207) to obtain a network address based on the second address domain,
wherein the air interface is further configured to receive a response from the address server (212), the response specifying a network address corresponding to a third one of the plurality of terminals (205, 209), the first terminal (205, 209) having been redirected to communicate with the second terminal (205, 209), wherein the network address is transmitted to the first terminal (205, 209), and the first terminal (205, 209) is configured to route the packet via the second terminal (205, 209) based upon the network address,
**characterised by** a timer configured to track a configurable duration for which the network address is valid, wherein the expiration of the timer requires renewal of the network address for further use by the first terminal (205, 209).

9. A terminal according claim 8, wherein the air interface is adapted to transmit another request for another network address corresponding to a third address domain different from the first and second address domains.

10. A terminal according to one of claims 8-9, wherein the network address is assigned dynamically in response to the request.

11. A terminal according to one of claims 8-10, wherein the first address domain is private and the second address domain is public.

12. A terminal according to one of claims 8-11, wherein the network address is statically pre-configured in the first terminal (205, 209).

13. A terminal according to one of claims 8-12, wherein the mesh network (207) includes a route server (215) which is configured to collect routing information from the plurality of terminals (205, 209), the routing information specifying reachability of the destination address, each of the terminals (205, 209) being configured to maintain a route table that is updated based on the collected routing information.

## Patentansprüche

1. Verfahren für ein Inter-Domänen-Routing eines Pakets über ein vermaschtes Netz (207), das eine Vielzahl von Terminals (205, 209) aufweist, wobei das Verfahren umfasst:
Empfangen einer Anfrage von einem ersten von den Terminals (205, 209) nach einer Netzwerkadresse, um das Paket über das vermaschte Netz (207) zu leiten, wobei das Paket von einer ersten Adressendomäne ausgeht und eine Zieladresse, die einer zweiten Adressendomäne zugeordnet ist, die sich von der ersten Adressendomäne unterscheidet, spezifiziert;
Zuweisen der Netzwerkadresse auf der Basis der zweiten Adressendomäne; und
Übertragen der Netzwerkadresse an das erste Terminal (205, 209), wobei das erste Terminal (205, 209) das Paket aufgrund der Netzadresse über ein zweites Terminal (205, 209) leitet, wobei das erste Terminal (205, 209) so umgelenkt wurde, dass es mit dem zweiten Terminal (205, 209) kommuniziert,
**dadurch gekennzeichnet, dass** die Netzadresse im Zuweisungsschritt für eine konfigurierbare Dauer gültig ist.

2. Verfahren nach Anspruch 1, ferner umfassend:
Starten eines Zeitnehmers, um die Dauer zu überwachen, wobei das Ablaufen des Zeitnehmers eine Erneuerung der Netzwerkadresse zur weiteren Nutzung durch das erste Terminal (205, 209) erfordert.

3. Verfahren nach einem der Ansprüche 1 - 2, ferner umfassend:
Empfangen einer anderen Anfrage nach einer anderen Netzwerkadresse, die einer dritten Adressendomäne entspricht, die sich von den ersten und zweiten Adressendomänen unterscheidet.

4. Verfahren nach einem der Ansprüche 1 - 3, wobei der Zuweisungsschritt als Antwort auf die Anfrage dynamisch durchgeführt wird.

5. Verfahren nach einem der Ansprüche 1 - 4, wobei die erste Adressendomäne privat ist und die zweite Adressendomäne öffentlich ist.

6. Verfahren nach einem der Ansprüche 1 - 5, wobei das erste Terminal (205, 209) im Empfangsschritt mit der Netzwerkadresse vorkonfiguriert wird.

7. Verfahren nach einem der Ansprüche 1 - 6, wobei das vermaschte Netz (207) einen Route-Server (215) aufweist, der Routing-Informationen von der Vielzahl von Terminals (205, 209) sammelt, wobei die Routing-Informationen die Erreichbarkeit der Zieladresse spezifizieren, wobei jedes der Terminals (205, 209) eine Route-Tabelle verwaltet, die auf der Basis der gesammelten Routing-Informationen aktualisiert wird.

8. Terminal für das Routing eines Paketes über mehrere Adressendomänen durch ein vermaschtes Netz (207), das eine Vielzahl von Terminals einschließt, wobei das Terminal aufweist:
eine Luft-Schnittstelle, die so konfiguriert ist, dass sie das Paket an ein erstes von einer Vielzahl von Terminals (205, 209) überträgt, wobei das Paket von einer ersten Adressendomäne ausgeht und eine Zieladresse spezifiziert, die einer zweiten Adressendomäne zugeordnet ist und die sich von der ersten Adressendomäne unterscheidet, wobei die Luft-Schnittstelle dafür ausgelegt ist, eine Umleitungsnachricht zu empfangen, die ein zweites von der Vielzahl von Terminals (205, 209) spezifiziert, um das Paket zu leiten; und
einen Prozessor (213), der so konfiguriert ist, dass er eine Anfrage an einen Adressenserver (212) im vermaschten Netz (207) erzeugt, um eine Netzwerkadresse aufgrund der zweiten Adressendomäne zu erhalten,
wobei die Luft-Schnittstelle ferner so konfiguriert ist, dass sie eine Antwort vom Adressenserver (212) empfängt, wobei die Antwort eine Netzwerkadresse spezifiziert, die einem dritten von einer Vielzahl von Terminals (205, 209) entspricht, wobei das erste Terminal (205, 209) umgelenkt wurde, um mit dem zweiten Terminal (205, 209) zu kommunizieren, wobei die Netzwerkadresse zum ersten Terminal (205, 209) übertragen wird und das erste Terminal (205, 209) so konfiguriert ist, dass es das Paket aufgrund der Netzwerkadresse durch das zweite Terminal (205, 209) leitet,
**gekennzeichnet durch** einen Zeitnehmer, der so konfiguriert ist, dass er eine konfigurierbare Dauer überwacht, über die die Netzwerkadresse gültig ist, wobei das Ablaufen des Zeitnehmers eine Erneuerung der Netzwerkadresse für eine weitere Verwendung **durch** das erste Terminal (205, 209) erfordert.

9. Terminal nach Anspruch 8, wobei die Luft-Schnittstelle dafür ausgelegt ist, eine andere Anfrage nach einer anderen Netzwerkadresse, die einer dritten Adressendomäne entspricht, die sich von den ersten und zweiten Adressendomänen unterscheidet, zu übertragen.

10. Terminal nach einem der Ansprüche 8 - 9, wobei die Netzwerkadresse als Antwort auf die Anfrage dynamisch zugewiesen wird.

11. Terminal nach einem der Ansprüche 8 - 10, wobei die erste Adressendomäne privat ist und die zweite Adressendomäne öffentlich ist.

12. Terminal nach einem der Ansprüche 8 - 11, wobei die Netzwerkadresse im ersten Terminal (205, 209) statisch vorkonfiguriert ist.

13. Terminal nach einem der Ansprüche 8 - 12, wobei das vermaschte Netz (207) einen Route-Server (215) einschließt; der so konfiguriert ist, dass er Routing-Informationen von der Vielzahl von Terminals (205, 209) sammelt, wobei die Routing-Informationen die Erreichbarkeit der Zieladresse spezifizieren, wobei jedes der Terminals (205, 209) so konfiguriert ist, dass es eine Route-Tabelle, die auf der Basis der gesammelten Routing-Informationen aktualisiert wird, verwaltet.

## Revendications

1. Procédé de réalisation d'acheminement entre domaines d'un paquet sur un réseau maillé (207) comprenant une pluralité de terminaux (205, 209), le procédé comprenant :
la réception d'une demande provenant d'un premier des terminaux (205, 209) pour une adresse de réseau à laquelle acheminer le paquet sur le réseau maillé (207), le paquet prenant naissance à partir d'un premier domaine d'adresses et spécifie une adresse de destination associée à un deuxième domaine d'adresses différent du premier domaine d'adresses ;
l'affectation de l'adresse de réseau en se basant sur le deuxième domaine d'adresses ; et
la transmission de l'adresse de réseau au premier terminal (205, 209), le premier terminal (205, 209) acheminant le paquet via un deuxième terminal (205, 209) en se basant sur l'adresse de réseau, le premier terminal (205, 209) ayant été redirigé pour communiquer avec le deuxième terminal (205, 209) ;
**caractérisé en ce que** l'adresse de réseau à l'étape d'affectation est valide pour une durée configurable.

2. Procédé selon la revendication 1, comprenant en outre :
le démarrage d'un temporisateur pour suivre la durée,
dans lequel l'expiration du temporisateur exige le renouvellement de l'adresse de réseau pour utilisation supplémentaire par le premier terminal (205, 209).

3. Procédé selon l'une des revendications 1 et 2, comprenant en outre :
la réception d'une autre demande pour une autre adresse de réseau correspondant à un troisième domaine d'adresses différent des premier et deuxième domaines d'adresses.

4. Procédé selon l'une des revendications 1 à 3, dans lequel l'étape d'affectation est effectuée dynamiquement en réponse à la demande.

5. Procédé selon l'une des revendications 1 à 4, dans lequel le premier domaine d'adresses est privé et le deuxième domaine d'adresses est public.

6. Procédé selon l'une des revendications 1 à 5, dans lequel le premier terminal (205, 209) à l'étape de réception est préconfiguré avec l'adresse de réseau.

7. Procédé selon l'une des revendications 1 à 6, dans lequel le réseau maillé (207) comprend un serveur (215) d'acheminement pour collecter de l'information d'acheminement provenant de la pluralité de terminaux (205, 209), l'information d'acheminement spécifiant l'atteignabilité de l'adresse de destination, chacun des terminaux (205, 209) entretenant une table d'acheminement qui est mise à jour en se basant sur l'information collectée d'acheminement.

8. Terminal destiné à acheminer un paquet à travers de multiples domaines d'adresses via un réseau maillé (207) incluant une pluralité de terminaux, le terminal comprenant :
une interface radio configurée pour transmettre le paquet à un premier de la pluralité de terminaux (205, 209), le paquet prenant naissance dans un premier domaine d'adresses et spécifiant une adresse de destination associée à un deuxième domaine d'adresses différent du premier domaine d'adresses, l'interface radio étant adaptée pour recevoir un message de redirection spécifiant un deuxième de la pluralité de terminaux (205, 209) pour acheminement du paquet ; et
un processeur (213) configuré pour engendrer une demande adressée à un serveur (212) d'adresses dans le réseau maillé (207) pour obtenir une adresse de réseau basée sur le deuxième domaine d'adresses ;
dans lequel l'interface radio est en outre configurée pour recevoir une réponse du serveur (212) d'adresses, la réponse spécifiant une adresse de réseau correspondant à un troisième de la pluralité de terminaux (205, 209), le premier terminal (205, 209) ayant été redirigé pour communiquer avec le deuxième terminal (205, 209), l'adresse de réseau étant transmise au premier terminal (205, 209), et le premier terminal (205, 209) étant configuré pour acheminer le paquet via le deuxième terminal (205, 209) en se basant sur l'adresse de réseau ;
**caractérisé par** un temporisateur configuré pour suivre une durée configurable pendant laquelle l'adresse de réseau est valide, l'expiration du temporisateur exigeant le renouvellement de l'adresse de réseau pour utilisation supplémentaire par le premier terminal (205, 209).

9. Terminal selon la revendication 8, dans lequel l'interface radio est adaptée pour émettre une autre demande pour une autre adresse de réseau correspondant à un troisième domaine d'adresses différent des premier et deuxième domaines d'adresses.

10. Terminal selon l'une des revendications 8 et 9, dans lequel l'adresse de réseau est affectée dynamiquement en réponse à la demande.

11. Terminal selon l'une des revendications 8 à 10, dans lequel le premier domaine d'adresses est privé et le deuxième domaine d'adresses est public.

12. Terminal selon l'une des revendications 8 à 11, dans lequel l'adresse de réseau est préconfigurée statiquement dans le premier terminal (205, 209).

13. Terminal selon l'une des revendications 8 à 12, dans lequel le réseau maillé (207) comprend un serveur (215) d'acheminement qui est configuré pour collecter de l'information d'acheminement provenant de la pluralité de terminaux (205, 209), l'information d'acheminement spécifiant l'atteignabilité de l'adresse de destination, chacun des terminaux (205, 209) étant configuré pour entretenir une table d'acheminement qui est mise à jour en se basant sur l'information collectée d'acheminement.
